# EUROPÄISCHE PATENTSCHRIFT

(11) **EP 1 776 418 B1**
(45) Veröffentlichungstag und Bekanntmachung des Hinweises auf die Patenterteilung: **26.12.2007**
(21) Anmeldenummer: 05774844.4
(22) Anmeldetag: 11.08.2005
(51) Int. Cl.: C08L 23/10

(54) **POLYMERBLEND AUS NICHT VERTRÄGLICHEN POLYMEREN**
POLYMER BLEND OF NON-COMPATIBLE POLYMERS
MELANGE POLYMERIQUE CONTENANT DES POLYMERES INCOMPATIBLES

(30) Priorität: 13.08.2004 DE 102004039451
(43) Veröffentlichungstag der Anmeldung: 25.04.2007
(73) Patentinhaber: SÜD-CHEMIE AG, 80333 München (DE)
(72) Erfinder: PUTSCH, Peter, 91080 Marloffstein (DE)
(74) Vertreter: Westendorp, Michael Oliver
(86) Internationale Anmeldenummer: PCT/EP2005/008753
(87) Internationale Veröffentlichungsnummer: WO 2006/018228

(56) Entgegenhaltungen:
- EP-A- 0 905 204
- EP-A- 0 952 187
- EP-A- 1 090 954
- WO-A-00/78540
- WO-A-02/100936
- WO-A-20/04111122
- DE-A1- 19 921 472
- FR-A- 2 854 899
- US-A1- 2001 033 924
- US-A1- 2003 092 816
- US-A1- 2003 162 877
- LAUS M ET AL: "NEW HYBRID NANOCOMPOSITES BASED ON AN ORGANOPHILIC CLAY AND POLY(STYRENE-B-BUTADIENE) COPOLYMERS" November 1997 (1997-11), JOURNAL OF MATERIALS RESEARCH, NEW YORK, NY, US, PAGE(S) 3134-3139 , XP009031817 ISSN: 0884-2914 das ganze Dokument
- ISHIDA H ET AL: "General Approach to Nanocomposite Preparation" 2000, CHEMISTRY OF MATERIALS, AMERICAN CHEMICAL SOCIETY, WASHINGTON, US, PAGE(S) 1260-1267 , XP002283069 ISSN: 0897-4756 das ganze Dokument

## Beschreibung

Die Erfindung betrifft ein Verfahren zur Herstellung eines Polypropylen-Polymerblends mit einem Anteil von, jeweils bezogen auf das Gewicht des Polymerblends, 40 bis 80 Gew.-% eines Polypropylens und/oder eines Polypropylencopolymers und einem Anteil von 10 bis 30 Gew.-% zumindest eines mit dem Polypropylen und/oder dem Polypropylencopolymer unverträglichen weiteren Polymers, sowie ein Polymerblend, wie es mit diesem Verfahren erhalten werden kann. Ferner betrifft die Erfindung einen aus dem Polymerblend hergestellten Formkörper.

Kunststoffe lassen sich einfach verarbeiten und ihre Formgebung ist nahezu keinen Grenzen unterworfen. Sie besitzen ein geringes Gewicht und lassen sich in ihren Eigenschaften innerhalb weiter Bereiche variieren. Durch die Kombination von bekannten und bewährten Polymeren erhält man neuartige Werkstoffe, die neue und nützliche Eigenschaftsbilder aufweisen, wie sie z.B. durch die Verbesserung des Schlagzähverhaltens, die Einstellung besonderer morphologischer Strukturen oder die Verknüpfung von harten und weichen oder elastischen Phasen gekennzeichnet sind. Problematisch ist bei der Herstellung solcher Werkstoffe, dass die Polymeren oft nicht miteinander verträglich sind. Die Werkstoffe sind dann nicht homogen, sondern weisen mehrere nebeneinander vorliegende Phasen auf. Dabei besteht die Schwierigkeit, die Polymeren so zu vermischen, dass ein stabiler Werkstoff erhalten wird. So lassen sich manche Polymere nicht zu Gemischen verarbeiten. Trotz einer Vermischung tritt relativ schnell eine Phasenseparierung auf, so dass nach dem Erstarren der Schmelze kein inniges Gemisch mit einer makroskopisch homogenen Struktur erhalten wird, sondern jeweils größere Bereiche entstehen, in denen jeweils nur eines der Polymere in weitgehend homogener Form enthalten ist. Zwischen den Bereichen aus verschiedenen Polymeren besteht meist kein ausreichender Zusammenhalt, so dass diese leicht voneinander getrennt werden können und ein aus diesem Polymergemisch gebildetes Formstück keine homogenen mechanischen Eigenschaften aufweist. Meist wird nach dem Mischen der Polymere die Schmelze nicht sofort zum gewünschten Formkörper verarbeitet, sondern zunächst ein Granulat hergestellt, dass sich leicht transportieren und lagern lässt. Beim erneuten Aufschmelzen für die Verarbeitung z.B. durch Spritzgießen darf ebenfalls keine Phasentrennung der Polymere auftreten.

In der Automobilindustrie werden Kunststoffe beispielsweise für Verkleidungen im Innenraum des Automobils verwendet. Dabei darf die Oberfläche der Verkleidung auch nach jahrelangem Gebrauch keine oder nur geringfügige Gebrauchsspuren aufweisen. Insbesondere bei glatten Flächen ist daher eine hohe Kratzfestigkeit der Oberfläche gefordert. Ein mögliches Polymerblend für die Herstellung solcher Verkleidungen könnte aus Polystyrol und Polypropylen bestehen. Polypropylen verleiht dem Formkörper eine gewisse Elastizität, während Polystyrol die Herstellung von Flächen mit hoher Kratzfestigkeit ermöglicht. Bisher sind jedoch keine Polymerblends aus Polypropylen und Polystyrol kommerziell erhältlich. Wird aus einem Polypropylengranulat und einem Polystyrolgranulat in üblicher Weise, beispielsweise durch Mischen in einem Extruder, ein Werkstoff hergestellt, so mischen sich die beiden Polymere nicht und nach dem Abkühlen trennen sich die Polymerphasen wieder voneinander. Versucht man aus einem derartigen Polymergemisch ein Formstück herzustellen, sammelt sich die Polystyrolphase an der Außenseite des Formstücks auf der Polypropylenphase an und nach dem Erkalten kann die Polystyrolphase gleich einem Film vom aus Polypropylen gebildeten Kern abgezogen werden.

Um stabile Polypropylen/Polystyrol (PP/PS)-Blends herstellen zu können, sind bereits Untersuchungen durchgeführt worden, in welchen organisch modifizierte Aluminiumsilicate PP/PS Blends zugesetzt worden sind. So berichten Y. Changjiang, X. Song, M. Hailin und J. Demin (China Synthetic Rubber Industry, 2003, 26 (1):42) über die Zugabe von Hybriden aus Styrol-Ethylen/Propylen-Diblock-copolymeren (SEP) und modifiziertem Montmorillonit zu PP/PS Blends. Die für die Untersuchungen verwendeten Blends enthielten Polypropylen und Polystyrol im Verhältnis 20/80. Es wurde gefunden, dass die Zugfestigkeit und die Schlagfestigkeit der Blends mit zunehmenden Gehalt an SEP zunimmt. Die Zugfestigkeit erreicht bei einem Anteil von 5 Gew.-% SEP ein Maximum und sinkt bei weiter steigendem Anteil wieder ab. Dies wird damit erklärt, dass nur ein begrenzter Anteil des als Vermittler wirkenden SEP die Grenzfläche zwischen den beiden Polymeren erreicht und das weitere SEP im Volumen der Polymeren in Form von Micellen angeordnet ist. In Bezug auf die Menge an zugegebenem Montmorillonit wurde gefunden, dass die Zugfestigkeit und die Schlagfestigkeit mit zunehmendem Anteil an Montmorillonit zunächst zunimmt und bei einem Gewichtsanteil im Bereich von 2 bis 3 Gew.-% ein Maximum erreicht, um dann mit weiter steigendem Anteil wieder abzusinken. Für diese Untersuchungen wurde ein Polymergemisch PP/PS/SEP = 20/80/5 verwendet. Der Gewichtsanteil des Montmorillonits wurde im Bereich von 0 bis ca. 7 Gew.-% variiert.

Y. Liu, G. Baohua und Z. Zengmin (China Plastics, Band 16, Nr. 2; Februar 2002) berichten über die Herstellung von Polypropylen/Polystyrol/Montmorillonit-Nano-Verbundmaterialien. Durch ein spezielles Verfahren kann der Montmorillonit interkaliert und dann auf Nanoebene im Polymermaterial verteilt werden. Für die Untersuchungen wurde ein Montmorillonit verwendet, welcher durch Interkalierung mit 6-Aminocapronsäure, Caprolactam oder Cetyltrimethylammoniumbromid modifiziert worden war. In einer ersten Stufe wird ein Polystyrol/Montmorillonit-Verbundmaterial hergestellt. Dazu wird der organisch modifizierte Montmorillonit zunächst in deionisiertem Wasser gelöst und nach Zugabe eines Initiators Styrol tropfenweise zugegeben, um eine Emulsionspolymerisation durchzuführen. Das Polystyrol/Montmorillonit-Verbundmaterial wird anschließend durch Filtration abgetrennt und getrocknet. Anschließend wird das Material mit Polypropylen bei einer Temperatur von 230°C während zehn Stunden zu einem Trockenmaterial verknetet. Dieses Trockenmaterial wird dann durch Spritzgießen zu Probenstücken geformt. Die Autoren berichten über eine Untersuchung des Schichtabstandes des Montmorillonits in den verschiedenen Herstellungsstufen. Bereits durch die organische Modifizierung des Montmorillonits erfolgt eine Aufweitung des Schichtabstandes. Nach der Emulsionspolymerisation des Styrols hat eine weitere Aufweitung des Schichtabstandes stattgefunden. Dies wird in der Weise interpretiert, dass Styrolmonomere zwischen die Montmorillonitschichten eingedrungen sind und anschließend eine Polymerisation stattgefunden hat. Die Polystyrolmakromoleküle führen zu einer weiteren Vergrößerung des Schichtabstandes. Untersuchungen zur Verteilung von organisch modifiziertem Montmorillonit in bereits polymerisiertem Polypropylen zeigen keine signifikante Erweiterung des Schichtabstandes. Die Autoren gehen davon aus, dass der organisch modifizierte Montmorillonit noch eine gewisse Zahl von Hydroxylgruppen an der Oberfläche der Silikatschicht aufweist, so dass zwischen den stark polaren Hydroxygruppen und den nicht polaren Polypropylenmolekülen eine starke Abstoßungswirkung besteht. Wird der aus Polystyrol und Montmorillonit gebildete Verbund zu Polypropylen gegeben, erfolgt eine Auftrennung der Montmorillonitschichten, so dass eine Verteilung des Montmorillonits auf Nanoebene verwirklicht wird. Untersuchungen mit dem Transmissionselektronenmikroskop (TEM) zeigen, dass die Montmorillonitschichten in Nanodimension aufgetrennt sind. Dem Artikel ist nicht zu entnehmen, in welchem Verhältnis Polypropylen und Polystyrol im fertiggestellten Blend enthalten sind und wie hoch der Anteil des Montmorillonits ist. Das im Artikel gezeigte Röntgendiffraktionsspektrum zeigt jedoch keinen Anteil einer kristallinen Polypropylenphase. Dies spricht dafür, dass auch hier, wie im oben genannten Artikel von Y. Changjiang et al. das Polypropylen als Nebenphase vorliegt, also nur einen geringen Anteil am Werkstoff bildet. Das Herstellungsverfahren ist durch die Emulsionspolymerisation des Styrols in Gegenwart des organisch modifizierten Montmorillonits aufwändig. Da die Herstellung solcher Komposite unter einem hohen Kostendruck erfolgt, ist dieses Verfahren für die industrielle Anwendung wenig günstig.

Q. Zhang, H. Yang und Q. Fu (Polymer 45 (2004) 1913 - 1922) berichten über Versuche zur Kompatibilisierung von PP/PS-Blends durch Zugabe von SiO₂-Nanopartikeln. Durch Zugabe von SiO₂-Nanopartikeln konnte bei kurzen Mischzeiten eine drastische Verkleinerung der Größe der aus Polystyrol gebildeten Mikrodomänen bei einer sehr homogenen Größenverteilung beobachtet werden. Wurden die Mischzeiten jedoch verlängert, wurde eine Zunahme der Größe der aus Polystyrol gebildeten Mikrodomänen beobachtet. Die Zugabe von SiO₂-Nanopartikeln führte zu einer deutlichen Viskositätszunahme der Schmelze des PP/PS-Blends. Die SiO₂-Nanopartikel waren mit Octamethylcyclotetraoxysilan modifiziert, um eine Oberfläche mit hydrophoben Eigenschaften zu erhalten. Die Versuche wurden mit einem Polymerblend durchgeführt, das PP und PS in einem Verhältnis 70 : 30 enthielt. Die Vermengung der Komponenten erfolgte in einem gleichlaufenden Doppelschraubenextruder mit einem Verhältnis L/D der Schrauben von 32 und einem Durchmesser von 25 mm bei einer Mischzeit von weniger als 3 Minuten. Die extrudierten Stränge wurden in Wasser abgeschreckt und zu Pellets geschnitten. Aus den Pellets wurden Prüfkörper durch Spritzgießen hergestellt.

Y. Wang, Q. Zhang und Q. Fu (Macromol. Rapid Commun. 2003, 24, 231-235) untersuchten die Eigenschaften eines organisch modifizierten Montmorillonits als Vermittler in Polypropylen/Polystyrol-Blends. Für die Untersuchungen wurde ein Montmorillonit verwendet, der mit Dioctadecyldimethylammoniumbromid modifiziert worden war. Ein PP/PS-Blend mit einem Verhältnis PP/PS von 70 : 30 wurde mit unterschiedlichen Anteilen des organisch modifizierten Montmorillonits versetzt und bei einer Temperatur von 190°C vermischt. Ohne Zusatz des Vermittlers bilden sich im Blend Styroldomänen mit einer Größe von ungefähr 3 - 4 µm aus, wobei die Domänen jedoch nicht gleichmäßig im Volumen des Blends verteilt sind. Bei Zugabe von 2 Gew.-% des organisch modifizierten Montmorillonits verringert sich der Durchmesser der Polystyrol-Domänen auf ungefähr 2 - 3 µm. Wird der Anteil des organisch modifizierten Montmorillonits auf 5 bis 10 Gew.-% gesteigert, verringert sich der Durchmesser der Polystyroldomänen weiter auf Werte von ungefähr 0,5 - 1 µm. Bei einem Anteil von 30 Gew.-% verringert sich die Größe der Polystyrol-Domänen weiter auf Werte von 0,3 - 0,5 µm, wobei eine sehr enge Größenverteilung erreicht wird.

Bisher stehen in der Automobilindustrie noch keine Polypropylen/Polystyrol-Blends zur Verfügung, welche beispielsweise eine zufriedenstellende Oberfläche aufweisen, sodass diese auch in sichtbaren Bereichen, Beispielsweise im Bereich der Armaturentafel, verwendet werden können. Man ist daher auf andere Polymerblends ausgewichen. So verwendet man beispielsweise Polypropylen, das mit einem hohen Anteil an Talkum gefüllt ist. Die Oberflächen solcher Verkleidungen zeigen jedoch noch keine zufriedenstellende Kratzfestigkeit. Auch tritt bei mechanischer Belastung Weißbruch auf.

Der Erfindung lag daher als,erste Aufgabe zugrunde, ein Verfahren zur Herstellung von Polypropylen-Polymerblends zur Verfügung zu stellen, dass einerseits kostengünstig durchzuführen ist, und dass andererseits Blends ergibt, die auch nach einer Weiterverarbeitung keine Phasentrennung der Polymerbestandteile zeigen, so dass Formstücke mit wertvollen Eigenschaften hergestellt werden können.

Diese Aufgabe wird mit einem Verfahren mit den Merkmalen des Patentanspruchs 1 gelöst. Vorteilhafte Weiterbildungen des Verfahrens sind Gegenstand der abhängigen Ansprüche.

Überraschend wurde gefunden, dass beim Vermischen eines Polypropylens und/oder eines Polypropylencopolymers mit zumindest einem weiteren Polymer, das mit dem Polypropylen und/oder dem Polypropylencopolymer unverträglich ist, ein stabiles Polypropylen-Polymerblend erhalten werden kann, wenn das Polypropylen und/oder das Polypropylencopolymer sowie das weitere Polymer aufgeschmolzen wird, und die Schmelzen bei hochscherenden Bedingungen unter Zusatz eines organisch modifizierten Nanocompositfüllstoffs intensiv vermengt werden, wobei der Nanocompositfüllstoff ein Aluminiumschichtsilikat ist, welches modifiziert ist mit zumindest einem organischen Modifikationsagens, das ausgewählt ist aus der Gruppe, die gebildet wird aus Ammoniumverbindungen, Sulfoniumverbindungen und Phosphoniumverbindungen, welche zumindest eine langkettige Kohlenstoffkette mit 12 bis 22 Kohlenstoffatomen tragen, sowie zumindest einem Additiv, das ausgewählt ist aus der Gruppe, die gebildet ist aus Fettsäuren und Fettsäurederivaten, sowie nicht-anionischen, organischen Komponenten, die zumindest einen aliphatischen oder zyklischen Rest mit 6 bis 32 Kohlenstoffatomen enthalten.

Der Anteil des Polypropylens und/oder des Polypropylencopolymers beträgt bezogen auf die gesamte Masse des Polymerblends 40 bis 80 Gew.-%. Der Anteil des zumindest einen weiteren Polymers wird im Bereich von etwa 10 bis etwa 30 Gew.-%, vorzugsweise 10 bis 25 Gew.-% gewählt.

Beim erfindungsgemäßen Verfahren wird ein Polymerblend erhalten, das eine kontinuierliche Phase aus Polypropylen und/oder aus dem Polypropylencopolymer umfasst, in welchem Mikrodomänen des zumindest einen weiteren, mit dem Polypropylen und/oder dem Polypropylencopolymer unverträglichen Polymer verteilt sind. Die Mikrodomänen sind homogen in der kontinuierlichen Phase verteilt und bilden eine stabile Struktur aus, sodass auch nach einem erneuten Aufschmelzen des Polypropylen-Polymerblends kein wesentliches Koaleszieren der Mikrodomänen beobachtet wird. Die mit dem erfindungsgemäßen Verfahren erhaltenen Polypropylen-Polymerblends lassen sich daher beispielsweise durch Spritzgießen zu Formkörpern verarbeiten, die makroskopisch homogene Eigenschaften aufweisen. Auch weisen die aus einem solchen Polymerblend hergestellten Formkörper eine Oberfläche mit überraschend hoher Kratzbeständigkeit auf.

Die Vermischung der einzelnen Bestandteile kann in an sich beliebiger Weise erfolgen. So ist es möglich, das Polypropylen und/oder Polypropylencopolymer und das zumindest eine weitere, mit dem Polypropylen und/oder dem Polypropylencopolymer unverträgliche Polymer jeweils in Form eines Granulats, sowie der organisch modifizierte Nanocompositfüllstoff in Form eines Pulvers trocken zu vermischen und dann gemeinsam aufzuschmelzen und zu vermengen. Es ist aber auch möglich, zunächst das Polypropylen und/oder das Polypropylencopolymer oder das zumindest eine weitere Polymer mit dem Nanocompositfüllstoff zu compoundieren.

Dieser Compound kann dann entweder direkt als Schmelze weiterverarbeitet werden oder zunächst in ein Granulat überführt werden, das nach erneutem Aufschmelzen in der Schmelze mit dem jeweils anderen Polymers vermengt wird. Es ist aber auch möglich, den Nanocompositfüllstoff unmittelbar vor oder auch nach der Vermengung der Schmelzen von Polypropylen und/oder Polypropylencopolymer und dem zumindest einen weiteren Polymer direkt zur Schmelze zuzugeben. Die Vermengung mit dem Nanocompositfüllstoff erfolgt jeweils direkt mit dem Polymer, so dass eine Polymerisation in Gegenwart des Nanocompositfüllstoffs nicht erforderlich, ist, um den Nanocompositfüllstoff im Polymer zu verteilen.

Die Vermengung der Polymerbestandteile wird unter hochscherenden Bedingungen durchgeführt. Unter den hochscherenden Bedingungen wird die vom weiteren, mit dem Polypropylen und/oder dem Polypropylencopolymer unverträglichen Polymer gebildete Phase zerteilt, sodass Mikrodomänen ausgebildet werden. Außerdem erfolgt unter diesen Bedingungen eine nahezu vollständige Exfolierung des Nanocompositfüllstoffs. Es wird angenommen, dass die bei der Exfolierung aus den einzelnen Schichten des Nanocompositfüllstoffs gebildeten Lamellen eine Stabilisierung der Mikrodomänen bewirken, wobei die organisch modifizierten Nanocomposit-Lamellen als Vermittler zwischen den an sich unverträglichen Polymeren wirken, sodass ein Koaleszieren der aus dem weiteren Polymer gebildeten Mikrodomänen wirksam unterdrückt wird.

Nach dem erfindungsgemäßen Vermengen von Polypropylen und/oder eines Polypropylencopolymer mit dem zumindest einen mit dem Polypropylen und/oder dem Polypropylencopolymer unverträglichen weiteren Polymer wird das Blend in üblicher Weise granuliert, indem es beispielsweise in Wasser abgeschreckt wird oder ein Strang der Polymerschmelze zu Pellets geschnitten wird.

Die Ausbildung einer stabilen Mischphase mit einer kontinuierlichen Phase aus Polypropylen und/oder einem Polypropylencopolymer, in welcher Mikrodomänen aus zumindest einem mit dem Polypropylen und/oder dem Polypropylencopolymer unverträglichen weiteren Polymer angeordnet sind, wird auf die Vermittlerwirkung des organisch modifizierten Nanocompositfüllstoffs zurückgeführt. Unter einem organisch modifizierten Nanocompositfüllstoff wird dabei ein schichtförmiges Aluminiumsilikat verstanden, das einer speziellen Modifikation mit zumindest einem Modifizierungsagens und zumindest einem Additiv unterworfen wurde. Die Herstellung des im erfindungsgemäßen Verfahren verwendeten organisch modifizierten Nanocompositfüllstoffs erfolgt dabei nach einem bestimmten Verfahren, bei dem ein Rohton zunächst mit einem Modifizierungsagens modifiziert wird, sodass ein organophiles Tonmaterial erhalten wird. Dieses organophile Tonmaterial wird dann in einem weiteren Schritt mit einem Additiv modifiziert. Dadurch wird ein modifiziertes organophiles Tonmaterial, der im erfindungsgemäßen Verfahren verwendete Nanocompositfüllstoff, erhalten, welches sich beim Einarbeiten in eine Polymerzusammensetzung deutlich einfacher und vollständiger exfolieren lässt. Der Anteil an Aggregaten, welche aus mehreren Plättchen aufgebaut sind, lässt sich deutlich verringern. Dies lässt sich beispielsweise auf elektronenmikroskopischen Aufnahmen erkennen. Das Verfahren zur Herstellung des Nanocompositfüllstoffs ist in der PCT/EP2004/006397 beschrieben, welche die Priorität der DE 103 26 977 in Anspruch nimmt.

Im Einzelnen wird zunächst ein organophiles Tonmaterial hergestellt. Die Herstellung des organophilen Tonmaterials kann in an sich beliebiger Weise erfolgen. Bevorzugt wird das organophile Tonmaterial hergestellt, indem zunächst eine wässrige Suspension eines Rohtons hergestellt und diese dann mit einem organischen Modifikationsagens umgesetzt wird. Als Rohtone können übliche quellfähige Schichtsilikate eingesetzt werden. Diese können aus natürlichen Quellen gewonnen oder synthetisch hergestellt sein. Insbesondere geeignet sind Smektite, wie beispielsweise Montmorillonit, Hektorit, Saponit und Beidellit. Auch Bentonite können eingesetzt werden. Wegen der besseren Quellfähigkeit werden die Rohtone bevorzugt in ihrer Natriumform eingesetzt. Als organisches Modifikationsagens werden kationische organische Agenzien eingesetzt, wie beispielsweise Ammoniumverbindungen, die zumindest eine langkettige Kohlenstoffkette tragen, welche beispielsweise 12 bis 22 Kohlenstoffatome umfasst. Bevorzugt umfasst die Ammoniumverbindung zwei längerkettige Kohlenstoffketten. Die Kohlenstoffketten können gleich oder verschieden sowie linear oder verzweigt sein. Beispiele für geeignete Kohlenstoffketten sind Lauryl-, Stearyl-, Tridecyl-, Myristyl-, Pentadecyl- und Hexadecylgruppen. Beispiele für verzweigte längerkettige Kohlenstoffketten sind die 12-Methylstearyl- oder die 12-Ethylstearylgruppe. Eine besonders bevorzugte Kohlenstoffkette ist die Stearylgruppe. Die weiteren Valenzen des Stickstoffatoms sind bevorzugt durch kürzere Kohlenstoffketten abgesättigt, die 1 bis 22 Kohlenstoffatome umfassen können. Besonders bevorzugt werden die weiteren Valenzen des Stickstoffatoms durch Methylgruppen abgesättigt. Es ist jedoch auch möglich, dass die freien Valenzen durch Wasserstoffatome abgesättigt sind. Die am Stickstoff gebundenen Kohlenstoffketten können gesättigt oder ungesättigt sein und beispielsweise auch aromatische Gruppen umfassen. So kann die Ammoniumverbindung neben den langkettigen Kohlenstoffketten beispielsweise auch Benzylgruppen tragen. Die Ammoniumverbindungen können beispielsweise als Chloride eingesetzt werden. Neben den Ammoniumverbindungen können für die Herstellung des organophilen Tonmaterials beispielsweise auch die analogen Phosphonium- und Sulfoniumverbindungen verwendet werden. Organophile Tone, welche mit Ammoniumverbindungen modifiziert sind, sind als Ausgangsmaterial besonders bevorzugt.

Das organophile Tonmaterial wird mit Hilfe eines Additivs modifiziert. Als Additive zur Modifizierung des organophilen Tonmaterials können beispielsweise die folgenden Verbindungen eingesetzt werden:
Fettsäuren oder Fettsäurederivate, die bevorzugt ausgewählt sind aus Fettsäuren mit 10 - 13 Kohlenstoffatomen. Hier sind insbesondere Laurylsäure, Palmitinsäure, Stearinsäure, Oleinsäure, Linolsäure, Capronsäure und Rizinusöl zu nennen.

Die Fettsäurederivate umfassen beispielsweise hydrogenierte Derivate, Alkoholderivate, Aminderivate oder deren Mischungen. Sie können außerdem ausgewählt sein aus der Gruppe der polymeren Fettsäuren, der Ketofettsäuren, der Fettsäurealkyloxazoline und Fettsäurealkylbisoxazoline, oder deren Mischungen. Bei den ungesättigten Fettsäuren sind insbesondere die Mono- oder Poly-ungesättigten Hydroxyfettsäuren zu nennen.

Weiterhin können nicht anionische, organische Komponenten eingesetzt werden, die mindestens einen aliphatischen oder zyklischen Rest mit 6 - 32 Kohlenstoffatomen, vorzugsweise 8 - 22 Kohlenstoffatomen, insbesondere 10 - 18 Kohlenstoffatomen aufweisen. Besonders bevorzugt sind anionische, organische Komponenten aus einer der nachstehenden Stoffklassen:
1. Fettalkohole, gesättigt oder ungesättigt, einschließlich primärer als auch sekundärer Alkohole, insbesondere mit C₆ - C₂₂-Resten;
2. Fettaldehyde, Fettketone;
3. Fettalkoholpolyglykolether;
4. Fettamine;
5. Mono-, Di- und Triglyzeridester;
6. Fettsäurealkanolamide;
7. Fettsäureamide;
8. Fettsäurealkylester;
9. Fettsäureglukamide;
10. Dicarbonsäureester;
11. Wachse;
12. wasserunlösliche fettsaure Seifen (hierunter sind die Salze aus langkettigen Carbonsäuren mit zweiwertigen Metallen zu verstehen);
13. Montanwachse (hierunter sind Wachse mit einer Kettenlänge von C₂₆ - C₃₂ zu verstehen);
14. Paraffine und PE-Wachse.

Besonders bevorzugt sind Fettalkohole, Fettamide, Triglyzeridester, Fettsäurealkylester und Wachse.

Weiterhin können Siloxankomponenten verwendet werden, worunter nach IUPAC-Richtlinie Oligomere oder polymere Siloxane oder Siloxanderivate zu verstehen sind. Siloxanderivate sind dabei vorzugsweise solche, bei denen mindestens eine der CH₃-Seitengruppen am Si-Atom durch eine andere funktionelle Gruppe ersetzt ist. Besonders bevorzugt sind, ohne Beschränkung, Oligoalkylsiloxane, Polydialkylarylsiloxane, Polydiarylsiloxane, oder eine Mischung davon, wobei die genannten Siloxanderivate besonders bevorzugt sind, die mit zumindest einer reaktiven Gruppe funktionalisiert worden sind.

Die Vermischung von organophilem Ton und Additiv wird ohne Zusatz von Wasser oder einem anderen Lösungsmittel durchgeführt. Das organophile Tonmaterial weist bevorzugt einen sehr geringen Feuchtigkeitsgehalt bzw. Gehalt an Lösungsmittel auf, sodass keine Klumpenbildung beim Mischen auftritt bzw. keine plastische Verformung durchgeführt werden kann, wie sie beispielsweise beim Extrudieren erforderlich ist. Bevorzugt weist das organophile Tonmaterial einen Feuchtigkeitsgehalt bzw. einen Lösungsmittelgehalt von weniger als 10 Gew.-%, insbesondere weniger als 5 Gew.-% auf. Das Additiv wird in Substanz zugegeben. Gegebenenfalls kann das Additiv vor der Zugabe aufgeschmolzen werden.

Das organophile Tonmaterial wird in Form eines Pulvers in ein hochscherendes Mischaggregat gegeben. Das organophile Tonmaterial wird dazu auf eine geringe Korngröße gemahlen. Bevorzugt liegt die mittlere Teilchengröße (D₅₀-Wert) unterhalb von 50 µm, bevorzugt unterhalb eines D₅₀-Wertes von 30 µm, insbesondere weniger als 8 µm. Die mittlere Teilchengröße kann durch Laserbeugung bestimmt werden. Die Schüttdichte des organophilen Tonmaterials beträgt vorzugsweise weniger als 300 g/l, und ist insbesondere bevorzugt im Bereich von 150 bis 250 g/l gewählt. Die Schüttdichte lässt sich bestimmen, indem ein Standzylinder mit 1000 ml Inhalt, welcher bei der 1000 ml Graduierung abgeschnitten wurde, zunächst leer gewogen wird. Anschließend wird das Pulver in einem Zug eingefüllt, sodass sich oberhalb des oberen Randes ein Schüttkegeel ausbildet. Dieser Schüttkegel wird dann abgestreift und der volle Standzylinder erneut gewogen. Die Differenz ergibt dann das Schüttgewicht.

Die Vermischung des organophilen Tons und des Additivs erfolgt in einem hochscherenden Mischaggregat. Unter einem hochscherenden Mischaggregat wird dabei ein Mischer verstanden, in welchem die Komponenten des Gemischs unter hoher Scherwirkung miteinander vermischt werden, ohne dass dabei eine wesentliche Verdichtung oder Kompaktierung erfolgt. Während des Vermischens behält das Gemisch aus organophilem Tonmaterial und Additiv also die Form eines lockeren Pulvers. Nach dem Vermischen wird also unmittelbar ein Pulver erhalten, das in die Polymerzusammensetzung eingearbeitet werden kann. Es ist also nicht erforderlich, das modifizierte organophile Tonmaterial erneut zu vermahlen.

Während des Vermischens findet eine intensive Verwirbelung der Komponenten unter einem hohen Energieeintrag statt. Gleichzeitig wird während des intensiven Durchmischens eine Erhöhung der Temperatur des Mischgutes beobachtet. Zu Beginn des Mischvorgangs erfolgt eine annähernd gleichbleibende Stromaufnahme durch den Mischer. Nachdem der Mischvorgang weiter fortgeschritten ist, erhöht sich die Stromaufnahme des Mischer und damit auch der Energieeintrag in das Gemisch. Das Pulver beginnt zu agglomerieren. Ferner erhöht sich das Schüttgewicht des Pulvers. Der Mischvorgang wird bevorzugt in der Weise geführt, dass durch den durch die intensive Durchmischung bewirkten hohen Energieeintrag das Gemisch aus organophilem Tonmaterial und Additiv innerhalb weniger Minuten, beispielsweise 6 bis 8 Minuten, auf eine Temperatur verbracht wird, bei der die Stromaufnahme des Mischers nicht-linear ansteigt. Der Mischvorgang wird erst abgebrochen, nachdem beim Mischer für einige Zeit eine erhöhte Stromaufnahme beobachtet worden ist. Nach Überschreiten der optimalen Mischzeit erhöht sich die Stromaufnahme signifikant. Dies stellt ein Abbruchkriterium für den Mischprozess dar.

Es wird angenommen, dass durch die intensive Durchmischung bei erhöhter Temperatur ständig neue Oberflächen am organophilen Tonmaterial geschaffen werden, die in Kontakt zum Additiv gelangen. Es findet dabei eine Beschichtung der Oberfläche des organophilen Tonmaterials mit dem Additiv statt. Das Additiv wird vermutlich zum Teil in die Zwischenräume benachbarter Lamellen eingearbeitet. Es wird eine Veränderung der Porosität des organophilen Tonmaterials bewirkt, sowie eine Änderung der Kapillarkräfte. Dies verbessert die Delaminierbarkeit des modifizierten organophilen Tonmaterials in Polymeren deutlich. Neben der verbesserten Delaminierung wird auch eine verbesserte Fließfähigkeit des modifizierten organophilen Tonmaterials und eine verbesserte Dosierbarkeit beim Extrudierprozess beobachtet.

Bevorzugt wird das intensive Vermischen von organophilem Tonmaterial und Additiv bei erhöhter Temperatur durchgeführt. Wie bereits oben erwähnt, bewirkt der beim intensiven Vermischen erfolgende hohe Energieeintrag eine Erwärmung des Mischgutes, wobei nach einer anfänglichen Mischperiode eine nicht lineare Energieaufnahme des Mischers beobachtet wird.

Vorzugsweise erfolgt der Energieeintrag in das Mischgut nicht allein durch den Mischer, sondern das Mischgut wird zusätzlich erwärmt. Dazu wird das Mischgut, beispielsweise mit Hilfe eines Wärmemantels, gleichmäßig erwärmt. Für die Erwärmung kann beispielsweise ein lineares Wärmeprofil gewählt werden. Die Erwärmung wird vorzugsweise solange fortgeführt, bis eine nichtlineare Steigerung der Energieaufnahme des Mischers die Umsetzung zwischen organophilem Tonmaterial und Additiv anzeigt.

Vorzugsweise wird die Temperatur, bis zu welcher das aus organophilem Tonmaterial und Additiv gebildete Mischgut erwärmt wird, höher gewählt als der Schmelzpunktes des mindestens einen Additivs. Sofern mehr als ein Additiv im Mischgut vorhanden ist, wird die Temperatur so gewählt, dass sie oberhalb des Schmelzpunktes des höchstschmelzenden Additivs liegt.

Bevorzugt wird die Temperatur des Mischgutes während des intensiven Vermischens gesteigert. Wie bereits oben erläutert, kann die Temperatur des Mischgutes zunächst mit Hilfe einer zusätzlichen Wärmezufuhr gesteigert werden, bis die erhöhte Energieaufnahme des Mischers eine Umsetzung zwischen organophilem Tonmaterial und Additiv anzeigt. Auch nachdem dieser Punkt beim Vermischen von organophilem Tonmaterial und Additiv erreicht ist, wird die Temperatur vorzugsweise weiter gesteigert. Die Temperaturerhöhung kann dabei durch den Energieeintrag des Mischers oder durch eine externe Wärmezufuhr erfolgen.

Das intensive Mischen von organophilem Tonmaterial und Additiv wird bevorzugt in einem Temperaturbereich von 20 bis 200°C, insbesondere von 40 bis 150°C durchgeführt.

Wie bereits erläutert, nimmt das Schüttgewicht des organophilen Tonmaterials während des intensiven Mischens zu. Vorzugsweise wird beim intensiven Vermischen eine Erhöhung des Schüttgewichts von mindestens 20 %, vorzugsweise mindestens 40 %, insbesondere 60 %, besonders bevorzugt 80 %, weiter bevorzugt mindestens 100 % bezogen auf das Schüttgewicht des eingesetzten pulverförmigen, organophilen Tonmaterials erzielt.

Die Komponenten des Mischguts, organophiles Tonmaterial und Additiv, werden unter hohem Energieeintrag miteinander vermischt. Der Energieeintrag lässt sich durch die Energieaufnahme des Mischers, also die beim intensiven Vermischen verbrauchte elektrische Leistung, bestimmen, welche dann in Relation zum Volumen des Mischgutes gesetzt wird. Bevorzugt erfolgt während des intensiven Vermischens ein Energieeintrag von mindestens 300 kW/m³.

Das intensive Vermischen wird vorzugsweise so lange durchgeführt, bis eine Zunahme des Energieeintrags, gemessen anhand der Stromaufnahme des hochscherenden Mischaggregats, von mindestens 10 %, vorzugsweise mindestens 20 % erzielt wird.

Wie bereits erläutert, ist nach einer Induktionsperiode eine nichtlinerare Zunahme des Energieeintrags des Mischaggregats zu beobachten. Vorzugsweise wird die intensive Vermischung solange fortgeführt, bis die Zunahme des Energieeintrags am Ende des intensiven Mischens, gemessen anhand der Stromaufnahme des hochscherenden Mischaggregats, im Bereich zwischen 10 und 50 %, insbesondere zwischen 20 und 30 %, ausgehend von der Stromaufnahme des hochscherenden Rühraggregats zu Beginn des intensiven Vermischens, liegt.

Insbesondere wird das intensive Vermischen zumindest so lange durchgeführt, bis die Stromaufnahme des Mischaggregats innerhalb einer Minute um mindestens 20 % zunimmt.

Sofern die vorstehend beschriebene Zunahme der Stromaufnahme nicht nach einer Gesamtzeitdauer des intensiven Vermischens von etwa 5 Min. erreicht wird, wird das verwendete hochscherende Mischaggregat vorzugsweise zusätzlich beheizt.

Während des intensiven Vermischens behält das eingesetzte organophile Tonmaterial die Form eines Pulvers. Durch die intensive Verwirbelung der Partikel wird das organophile Tonmaterial mit dem Additiv umgesetzt und beschichtet. Die'Intensität des Mischvorgangs sowie dessen Dauer wird dabei so gewählt, dass die Partikelgröße, gemessen als D₅₀, um nicht mehr als 10 % während des intensiven Vermischens zunimmt. Besonders bevorzugt nimmt die Partikelgröße, gemessen als D₅₀, nicht zu oder fällt sogar. Die Veränderung der Partikelgröße des modifizierten organophilen Tonmaterials bezieht sich jeweils auf die ursprüngliche Partikelgröße, gemessen als D₅₀, der zum intensiven Vermischen eingesetzten Komponente a). Bevorzugt liegt die Partikelgröße D₅₀ des modifizierten organophilen Tonmaterials im Bereich von etwa 20 bis 5 µm.

Während des intensiven Vermischens nimmt das Schüttgewicht des organophilen Tonmaterials zu. Das Vermischen wird bevorzugt abgebrochen, wenn das Schüttgewicht sich gegenüber dem anfänglichen Schüttgewicht der Komponente a) um höchstens 200% erhöht hat. Durch das intensive Vermischen erhöht sich das Schüttgewicht also auf maximal das dreifache des Schüttgewichts des unbehandelten organophilen Tonmaterials. Bevorzugt liegt das Schüttgewicht des modifizierten organophilen Tonmaterials im Bereich von 400 bis 550 g/l.

Das Additiv wird in Substanz zum organophilen Tonmaterial zugegeben. Gemäß einer Ausführungsform des Verfahrens wird sowohl die Komponente a) als auch die Komponente b) in Pulverform eingesetzt. Die pulvrig feinkörnigen Festsstoffe verhalten sich beim Mischen wie eine Flüssigkeit. Es entsteht eine Thrombenbildung, sodass das Produkt in horizontaler und vertikaler Richtung intensiv bewegt wird. Der intensive Energieeintrag führt zu einer Temperaturerhöhung des Mischgutes bis zu einer nichtlinearen Erhöhung der Stromaufnahme des Mischers, resultierend in einer Erhöhung des Schüttgewichtes des Pulvers. Es können jedoch auch Additive verwendet werden, die bei Raumtemperatur flüssig sind. Diese werden vorzugsweise in einer Weise zum organophilen Tonmaterial gegeben, dass unmittelbar eine intensive Vermischung erfolgt, das Additiv also nicht zu einer Verklumpung des organophilen Tonmaterials führt. Bevorzugt wird das flüssige Additiv in der Nähe eines sich beim Verwirbeln des organophilen Tonmaterials ausbildenden Thrombus gegeben. Die Mischung aus organophilem Tonmaterial und Additiv wird im Mischaggregat in einer Art und Weise agitiert, sodass bei Umfangsgeschwindigkeiten bis zu 200 m/s eine Thrombenbildung auftritt. Beim Mischvorgang wird in der Mitte des Mischgefäßes eine Kegelbildung beobachtet., d.h. das Mischgut wird während des intensiven Mischvorgangs in Form eines Kegels zum Boden des Mischaggregats gezogen.

Bei der Herstellung des organisch modifizierten Nanocompositfüllstoffs liegt das organophile Tonmaterial sowohl vor als auch nach der Modifizierung in Form eines Pulvers vor.' Bevorzugt wird das erhaltene modifizierte organophile Tonmaterial so, wie es nach dem intensiven Vermischen anfällt, weiterverarbeitet und in das Polymer eingearbeitet. Vorzugsweise wird nach dem Vermischen kein getrennter Kompaktierungsschritt oder Verdichtungsschritt durchgeführt, um das modifizierte organische Tonmaterial weiter zu bearbeiten.

Gemäß einer besonders bevorzugten Ausführungsform erfolgt unmittelbar nach dem intensiven Vermischen ein Abkühlen der Mischung. Dazu wird das modifizierte organophile Tonmaterial bevorzugt auf Temperaturen von weniger als etwa 40°C, insbesondere weniger als etwa 30°C, insbesondere bevorzugt von etwa 20 bis 40°C abgekühlt.

Das Abkühlen erfolgt bevorzugt über einen Zeitraum, welcher dem 1- bis 3-fachen der Zeitdauer des vorangegangenen intensiven Vermischens entspricht.

Das abgekühlte modifizierte organische Tonmaterial (der Nanocompositfüllstoff) kann dann aus dem Mischaggregat entnommen und beispielsweise bis zur Weiterverarbeitung in geeignete Gebinde verpackt werden.

Bevorzugt erfolgt das Abkühlen des modifizierten organophilen Tonmaterials aktiv über eine Kühlung der Mischung bzw. des zur intensiven Vermischung verwendeten hochscherenden Mischaggregats.

Das Abkühlen des modifizierten organophilen Tonmaterials erfolgt bevorzugt in einem getrennten, kühlbaren Mischer.

Während des Abkühlens kann die Mischung weiter agitiert, insbesondere weiter intensiv vermischt werden.

Als hochscherendes Mischaggregat wird bevorzugt ein Heiz-KühlMischer oder eine Kombination aus einem Heizmischer und einem Kühlmischer verwendet. Die Heiz- bzw. Kühlmischer können unabhängig voneinander z.B. mit Wasser/Dampf oder Wärmeträgeröl oder elektrisch/ Heißluft/Luft- oder Wasserkühlung temperiert werden.

Für die Herstellung des modifizierten organophilen Tonmaterials ist es wesentlich, das eine intensive Verwirbelung von organophilem Tonmaterial und Additiv erfolgt. Bei der Wahl des Mischaggregats muss dies berücksichtigt werden. Das hochscherende Mischaggregat ist bevorzugt ausgewählt aus der Gruppe bestehend aus:
a) Schaufelmischer, wie z.B. Pflugscharmischer (Lödige Schnellmischer, Drais Schnellmischer, MTI-Turbinenmischer) mit sogenannten einfachen oder multiplen Kronenwerkzeugen;
b) Schneckenmischer, wie z.B. Schneckenmischer, die über eine Doppelschnecke verfügen, die entweder gleich oder gegenläufig arbeitet, Segmentschneckenmischer, z.B. coaxiale Kneter (BUSS Co-Kneter);
c) Fluidmischer, wie z.B. Kreiselmischer, mechanische oder pneumatische Fluidmischer z.B. Thyssen, Henschel, Papenmeier oder MTI-Heizmischer u.a.

Als hochscherendes Mischaggregat kann auch ein mechanischer Fluidmischer verwendet werden, der nach dem Fließbettprinzip arbeitet.

Es können zum intensiven Vermischen auch hochscherende Mischaggregate verwendet werden, welche Rührwerkzeuge und vorzugsweise mindestens ein Ableitblech aufweisen. Die Rührwerkzeuge'sind vorzugsweise aus Edelstahl, insbesondere aus martensitischen Stählen, aus RC40 und höher gehärteten Stählen hergestellt. Des weiteren sind sie vorzugsweise korrosionsresistent. Idealerweise sind die Fluidisiermesser u.a. mit "Stellite K12" Hartmetallaufschweissung an allen relevanten Stellen gepanzert. Der Abstand des Bodenräumers vom Mischerboden wird bevorzugt auf einen durch das Austragsmaterial definierten Minimalabstand einjustiert und die anderen Fluidisierflügel und das Hornwerkzeug so angeordnet, dass mit den Fluidisierflügeln bei einem gewählten Füllgrad des Schnellmischers die erforderlichen Temperaturen zuverlässig erreicht werden können.

Um die notwendig Fluidisierung optimal zu garantieren, sind minimal 1, vorzugsweise 2 oder mehr Ableitbleche installiert. Diese sind in einer Art und Weise angeordnet, dass das oberflächenmodifizierte organophile Tonmaterial optimal durchwirbelt wird.

Ein derartiger organisch modifizierter Nanocompositfüllstoff wird beispielsweise von der Süd-Chemie AG, München, DE unter dem Handelsnamen "Nanofil^{®} SE 3000" angeboten.

Beim erfindungsgemäßen Verfahren wird der organisch modifizierte Nanocompositfüllstoff bezogen auf die Masse des Polypropylen-Polymerblends vorzugsweise in einem Anteil von 0,5 bis 10 Gew.-% beigegeben, bevorzugt 0,5 bis 5 Gew.-%, insbesondere bevorzugt 0,5 bis 2 Gew.-%.

Als ein Polymerbestandteil des Polymerblends wird Polypropylen und/oder Polypropylencopolymer verwendet. Dieses Polymer verleiht dem Polymerblend eine hohe Schlagzähigkeit. Ferner ist es kostengünstig, was für großtechnische Anwendungen, z.B. für die Herstellung von Formteilen in der Automobilindustrie bevorzugt ist. Als Polypropylen und/oder Polypropylencopolymere können an sich alle Polymere verwendet werden, in welchen Propylen als Monomereinheit enthalten ist. Vorzugsweise beträgt der Anteil der auf Propylen zurückgehenden Monomereinheiten am Polymer zumindest 50 Mol-%, vorzugsweise mehr als 80 Mol-%. Es versteht sich, dass der Anteil jeweils einen Mittelwert der im Blend enthaltenen Polymeren darstellt. Beispiel für ein geeignetes Polypropylencopolymer sind Propylen/Ethylen-Copolymere. Als Polypropylen kann sowohl syntaktisches, als auch isotaktisches oder ataktisches Polypropylen verwendet werden. Der Melt Flow Index (MFI) der verwendeten Polypropylene und/oder Polypropylencopolymere liegt vorzugsweise im Bereich von 1 bis 30 g/10 min, bevorzugt 5 bis 20 g/10 min, insbesondere bevorzugt 8 bis 12 g/10 min. Der MFI wird bei 230 °C und 2,16 kg entsprechend ISO 1133 bestimmt.

Als weiterer Bestandteil wird bei der erfindungsgemäßen Herstellung des Polymerblends zumindest ein mit dem Polypropylen und/oder dem Polypropylencopolymer unverträgliches weiteres Polymer eingesetzt. Im Sinne der Erfindung wird unter einem unverträglichen Polymer ein Polymer verstanden, welches sich im wesentlichen nicht mit dem Polypropylen und/oder dem Polypropylencopolymer mischt. Beim Aufschmelzen eines Gemisches aus Granulaten des Polypropylens und/oder des Polypropylencopolymers und des zumindest einen weiteren Polymers findet keine Vermischung statt. Werden die beiden Polymerarten vermengt, liegen sie in getrennten Phasen nebeneinander vor. Wird eine derartige Mischung über einen längeren Zeitraum in der Schmelze gehalten, koaleszieren die aus jeweils einer Polymersorte gebildeten Domänen, d.h. es findet eine Phasenseparierung statt. Die Schmelze des zumindest einen weiteren Polymers schwimmt auf der Schmelze des Polypropylens und/oder des Polypropylencopolymers auf bzw. umgekehrt.

Das zumindest eine weitere Polymer ist bevorzugt ausgewählt aus der Gruppe von Polystyrol (PS) und Polystyrolcopolymeren. Die weiteren Polymere weisen bevorzugt einen MFI von 1 bis 30 g/10 min, vorzugsweise 5 bis 20 g/10 min, insbesondere bevorzugt 8 bis 12 g/10 min auf, gemessen bei 230 °C und 2,16 kg gemäß ISO 1133.

Besonders bevorzugt wird beim erfindungsgemäßen Verfahren eine Mischung aus Polypropylen und Polystyrol und/oder Polypropylencopolymeren und/oder Polystyrolcopolymeren verwendet.

Gemäß einer bevorzugten Ausführungsform wird der Schmelze ein Blockcopolymer als Vermittler beigegeben, vorzugsweise in einem Anteil, bezogen auf die Masse des Polymerblends, von 5 bis 15 Gew.-%. Es wird angenommen, dass diese Blockcopolymere an der Grenzfläche zwischen zwei Polymerphasen angeordnet sind und so eine Stabilisierung der Mikrodomänen des im Unterschuss im Polymerblend enthaltenen weiteren Polymers bewirken. Geeignete Blockcopolymere sind beispielsweise Styrol-Ethylen/Propylen-Diblockcopolymere (SEP) oder auch Styrol-Ethylen/Propyen-Styrol-Triblockcopolymere (SEPS). Diese Blockcopolymere wirken als Schlagzähmodifikatoren. Bei Zusatz von SEP oder SEPS werden Polymerblends erhalten, aus denen Formkörper hergestellt werden können, deren Oberfläche eine hohe Kratzfestigkeit aufweist. Weitere geeignete Blockcopolymere sind Ethylen/Propylen-Blockcopolymere (EPM), Ethylen/Propylen/Dien-Blockcopolymere (EPDM), Styrol-Butadien-Styrol-Blockcopolymere (SBS) oder Styrol-Butadien-Rubber-Blockcopolymere (SBR).

Für die Herstellung eines hochwertigen Polymerblends ist es wesentlich, dass eine intensive Zerteilung der aus dem weiteren, mit dem Polypropylen und/oder dem Polypropylencopolymeren unverträglichen Polymer gebildeten Phase erfolgt, sodass das weitere Polymer Mirkodomänen in einer aus dem Polypropylen und/oder dem Polypropylencopolymeren gebildeten kontinuierlichen Phase ausbildet. Das intensive Vermengen der Polymerphasen erfolgt daher unter einem hohen Energieeintrag, wobei das intensive Vermengen der Schmelzen vorzugsweise bei einem Energieeintrag von 0,1 bis 5 kWh/kg, insbesondere bevorzugt 0,2 bis 4 kWh/kg, erfolgt. Der Energieeintrag lässt sich aus der Energieaufnahme der Mischapparatur ermitteln, die in Bezug zur verarbeiteten Polymermenge gesetzt wird.

Vorzugsweise erfolgt das intensive Vermengen der Schmelzen während einer Mischzeit von wenigstens einer Minute, vorzugsweise 1 bis 15 Minuten. Die Mischzeit wird dabei so gewählt, dass einerseits eine möglichst intensive Zerteilung der aus dem weiteren Polymer gebildeten Phase unter Ausbildung von Mikrodomänen erfolgt und eine möglichst homogene Verteilung der Mikrodomänen in der kontinuierlichen Phase erreicht wird, und andererseits die thermische Belastung der Polymere möglichst gering gehalten wird.

Die intensive Vermengung der Schmelzen von Polypropylen und/oder Polypropylencopolymeren mit dem zumindest einen weiteren Polymer unter hohem Energieeintrag erfolgt bevorzugt in einem Extruder, vorzugsweise einem gleichlaufenden Doppelwellenextruder. Derartige Extruder ermöglichen einen hohen Energieeintrag in das aus den beiden Polymerschmelzen gebildete Gemisch und dadurch eine intensive Durchdringung der beiden Polymerphasen. Die intensive Vermengung muss nicht notwendigerweise mit einem Extruder erfolgen. Es können auch andere Mischvorrichtungen verwendet werden, die einen hohen Energieeintrag in das aus der Schmelze des Polypropylens und/oder Polypropylencopolymers und der Schmelze des zumindest ein weiteren Polymers gebildeten Gemisches ermöglicht. Solche Vorrichtungen sind dem Fachmann bekannt. Neben gleichlaufenden Doppelwellenextruderh'können auch andere Typen von Extrudern verwendet werden, die einen höhen Energieeintrag ermöglichen. Geeignet sind z.B. auch Buss-Kneter.

Bevorzugt wird die Vermengung von Polypropylen und/oder Polypropylencopolymeren mit dem zumindest einen weiteren Polymer über ein Temperaturprofil durchgeführt. Die Temperatur steigt dabei mit zunehmender Vermischung an, wobei die Temperatur zu Beginn der Vermengung bei etwa 150°C - 200 °C gewählt wird und dann auf Temperaturen von etwa 210 °C - 260°C gesteigert wird. Die obere Grenze für die Temperatur wird im wesentlichen durch die Wärmestabilität der Polymere bestimmt. Es sollte keine merkliche Zersetzung der Polymere erfolgen. Die untere Grenze der Temperatur wird durch eine ausreichende Viskosität der Schmelze bestimmt.

Die Eigenschaften des mit dem erfindungsgemäßen Verfahren erhaltenen Polymerblends werden wesentlich durch die Zugabe des organisch modifizierten Nanocomposits beeinflusst. Das wie oben beschrieben mit einem Modifizierungsagens und einem Additiv modifizierte Schichtsilikat wird dabei zunächst in Form eines Schichtstapels zum Polymer bzw. Polymergemisch gegeben und wird durch die intensive Vermengung der beiden Polymerschmelzen nahezu vollständig exfoliert, so dass im idealen Fall einzelne Lamellen des Schichtsilikats im Polymerblend verteilt sind. Ohne an eine Theorie gebunden zu sein, wird angenommen, dass die plättchenförmigen Lamellen des Nanocomposits für eine intensive Verbindung zwischen den beiden unverträglichen Polymerphasen sorgen, indem diese an den Phasengrenzen zwischen Polypropylen und/oder Polypropylencopolymer und dem zumindest einen weiteren Polymer angeordnet sind und so eine Stabilisierung der aus dem weiteren Polymer gebildeten Mikrodomänen bewirken. Ebenso wird angenommen, dass sich die plättchenförmigen Lamellen des Nanocompositfüllstoffs an der Oberfläche des Formstücks ansammeln und dadurch die Kratzbeständigkeit der Oberfläche erhöht wird. Elektronenmikroskopische Untersuchungen zeigen, dass bei der praktischen Ausführung bei einem Anteil der Schichtstapel keine vollständige Exfolierung'erfolgt, sondern noch Schichtstapel im Polymerblend enthalten sind, die eine geringe Anzahl von Schichten umfassen. Die Anzahl der Schichten beträgt dabei ungefähr zwei bis fünf. Die Lamellen weisen im allgemeinen eine Länge von 200 bis 500 nm und eine Dicke von etwa einem Nanometer auf. Bei der Herstellung des Polymerblends wird der Nanocompositfüllstoff bzw. das schichtförmige Aluminiumsilikat bevorzugt dem Polypropylen und/oder Polypropylencopolymer zugegeben.

Bei der Herstellung des Polymerblends werden die aus dem Polypropylen und/oder Polypropylencopolymer bzw. dem weiteren Polymer gebildeten Phasen unter hohem Energieeintrag vermengt. Dies soll zum einen die Ausbildung von Mikrodomänen aus der Phase des weiteren Polymers bewirken und zum anderen die Exfolierung des Nanocompositfüllstoffs. Wird die Vermengung in einem Extruder durchgeführt, kann ein Gemisch der Granulate von Polypropylen und/oder Polypropylencopolymer sowie des weiteren Polymers hergestellt werden, wobei der Nanocompositfüllstoff vorzugsweise bereits im Granulat des Polypropylens und/oder Polypropylencopolymers enthalten ist, und das Granulat im Extruder aufgeschmolzen und vermengt werden. Das Blend kann dann beispielsweise wieder granuliert werden. Sofern im erhaltenen Granulat die Vermengung der Polymerphasen noch nicht ausreichend ist, kann das Granulat auch erneut in einen Extruder gegeben und dort erneut aufgeschmolzen und vermengt werden.

Bei der Vermengung der Polymerphasen können jedoch auch andere Wege verfolgt werden, sofern diese eine intensive Vermengung der Polymerphasen ermöglichen. So kann beispielsweise sowohl das Polypropylen und/oder das Polypropylencopolymer als auch das zumindest eine weitere Polymer zunächst getrennt aufgeschmolzen und die Schmelzen dann unter hohem Energieeintrag vermengt werden. Das Gemisch kann zunächst zu einem Granulat weiterverarbeitet werden. Wird das Granulat erneut aufgeschmolzen, beispielsweise um durch Spritzgießen ein Formstück herstellen zu können, erfolgt makroskopisch keine Auftrennung der aus Polypropylen und/oder Polypropylencopolymer bzw. aus dem zumindest einen weiteren Polymer gebildeten Phasen. Auch nach dem Spritzgießen behält das Polymerblend seine'makroskopisch homogene Struktur. Das zumindest eine weitere Polymer schwimmt nicht auf dem Polypropylen und/oder Polypropylencopolymer auf und blättert daher nach Erstarren der Schmelze auch nicht ab.

Bei dieser Ausführungsform des Verfahrens wird die Schmelze des zumindest einen weiteren Polymers bevorzugt über eine oder mehrere, vorzugsweise in Fließrichtung der Schmelze des Polypropylens und/oder Polypropylencopolymers hintereinander angeordnete Öffnungen der Schmelze zugeführt. Bei der praktischen Ausführung kann dazu beispielsweise in der Weise vorgegangen werden, dass zunächst das Polypropylen und/oder Polypropylencopolymer aufgeschmolzen wird, beispielsweise in einem Extruder, und die Schmelze des zumindest einen weiteren Polymers, vorzugsweise Polystyrol, dann in den Extruder in den Strom der Schmelze des Polypropylens und/oder Polypropylencopolymers eingespeist wird. Die Zugabe kann dabei über eine einzelne Düse oder auch über mehrere, vorzugsweise hintereinander angeordnete Düsen erfolgen.

Die Eigenschaften des Polymerblends können in weiten Bereichen variiert werden, indem weitere Füllstoffe zugegeben werden. In einer Ausführungsform wird der Schmelze aus dem Polypropylen und/oder Polypropylencopolymer und dem zumindest einen weiteren Polymer ein faserförmiger Verstärkungsstoff beigegeben. Derartige Verstärkungsstoffe können beispielsweise Glasfasern, Kohlefasern, Chemiefasern, wie Polyester, Polyamid, Polyacrylnitrilaramid, oder auch Naturfasern, wie Sisal, Baumwolle, Holz, Zellulose, Hanf, Jute, oder auch Kokos sein. Daneben kann das Polymerblend auch noch übliche mineralische Füllstoffe enthalten, wie Kreide, Talk, Wollastonit, Titanoxid, Magnesiumhydroxid oder Aluminiumhydroxid. Ebenso können Pigmente oder Farbstoffe, Lichtstoffmittel, Wärmestabilisatoren oder auch Verarbeitungshilfsmittel, wie z.B. Wachse, enthalten sein.

Wie bereits erläutert, ergibt das erfindungsgemäße Verfahren ein Polymerblend mit hervorragenden Eigenschaften, das sich insbesondere für die Herstellung von Formstücken für die Automobilindustrie eignet, beispielsweise für Innenraumverkleidungen. Gegenstand der Erfindung ist daher auch ein Polymerblend, enthaltend ein Polypropylen und/oder ein Polypropylencopolymer in einem Anteil von, bezogen auf das Gewicht des Polymerblends, 40 bis 80 Gew.-%, zumindest ein mit dem Polypropylen und/oder dem Polypropylencopolymer unverträgliches weiteres Polymer in einem Anteil von 10 bis 30 Gew.-%, sowie ein exfolierter organisch modifizierter Nanocompositfüllstoff, wobei das Polypropylen und/oder das Polypropylencopolymer eine kontinuierliche Hauptphase und das zumindest eine weitere Polymer eine diskontinuierliche Nebenphase bildet, und wobei die diskontinuierliche Phase des weiteren Polymers in einem Schnittbild durch das Polymerblend einen Anteil von inselförmigen Mikrodomänen mit einer Fläche von weniger als 0,04 µm², bezogen auf die gesamte Fläche der von dem weiteren Polymer gebildeten Mikrodomänen, von mehr als 18 %, vorzugsweise mehr als 20 %, insbesondere bevorzugt mehr als 25 %, und ganz besonders bevorzugt mehr als 28 % aufweist. Vorzugsweise beträgt der Anteil der inselförmigen Mikrodomänen mit einer Fläche von weniger als 0,1 µm², bezogen auf die gesamte Fläche der von dem weiteren Polymer gebildeten Mikrodomänen, mehr als 35 %, bevorzugt mehr als 40 %, insbesondere mehr als 50 %.

Das erfindungsgemäße Polymerblend umfasst eine kontinuierliche Phase, welche aus dem Polypropylen und/oder dem Polypropylencopolymer gebildet ist. In dieser kontinuierlichen Phase sind Mikrodomänen angeordnet, die aus dem weiteren, mit dem Polypropylen und/oder dem Polypropylencopolymer unverträglichen Polymer gebildet sind. Beim erfindungsgemäßen Polymerblend weisen die Mikrodomänen des weiteren Polymers eine ungewöhnlich geringe Ausdehnung auf. Auch beim erneuten Aufschmelzen eines aus dem erfindungsgemäßen Polymerblend hergestellten Granulats koaleszieren die Mikrodomänen nur in geringem Ausmaß. Die Verteilung und die Größe der Mikrodomänen kann auf einem Schnitt durch einen aus dem Polymerblend gebildeten Probenkörper mit Hilfe elektronenmikroskopischer Aufnahmen sichtbar gemacht werden. Die aus dem Nanocompositfüllstoff gebildeten Lamellen sind im Polymerblend verteilt, wobei die Lamellen auch an der Grenzfläche der beiden Polymerphasen angeordnet sind. Es wird angenommen, dass durch die aus dem Nanocompositfüllstoff gebildeten Lamellen die Mikrodomänen aus dem weiteren Polymer stabilisiert werden und das Polymerblend daher makroskopisch homogene Eigenschaften aufweist und auch bei einer Weiterverarbeitung, beispielsweise durch Spritzgießen, keine Trennung der Phasen beobachtet wird.

Der im Polymerblend eingearbeitete Nanocompositfüllstoff ist vorzugsweise in einem Anteil bezogen auf das Gesamtgewicht des Polymerblends, von 0,1 bis 10 Gew.-%, vorzugsweise 0,5 bis 5 Gew.-%, insbesondere bevorzugt 0,5 bis 2 Gew.-% enthalten. Der Nanocompositfüllstoff wurde bereits weiter oben im Zusammenhang mit dem erfindungsgemäßen Verfahren näher erläutert.

Das zumindest eine weitere, mit dem Polypropylen und/oder dem Polypropylencopolymer unverträgliche Polymer wird bevorzugt ausgewählt aus der Gruppe, die gebildet ist aus Polystyrol (PS), Polymethylmetacrylat (PMMA) und Acrylnitril-Butadien-Styrol (ABS) sowie Polycarbonaten und thermoplastischen Polyestern.

Als weiterer Vorteil weisen die erfindungsgemäßen Polymerblends eine ähnliche Schwindung wie Polypropylen auf, das mit 20% Talkum gefüllt wurde. Die Verwendung eines derartigen Kunststoffs ist für die Herstellung von Formkörpern für den Automobilbau weit verbreitet. Bei einer Verwendung des erfindungsgemäßen Polymerblends zur Herstellung von Formkörpern kann daher auf bereits vorhandene Werkzeuge zurückgegriffen werden.

Das Polymerblend ist bevorzugt nach dem oben beschriebenen Verfahren hergestellt.

Die aus dem erfindungsgemäßen Polymerblend hergestellten Formkörper zeichnen sich durch eine sehr hohe Kratzfestigkeit ihrer Oberfläche aus. Gegenstand der Erfindung ist daher auch ein Formkörper aus dem oben beschriebenen Polymerblend. Bevorzugt ist der Formkörper durch Spritzgießen hergestellt. Ohne an eine Theorie gebunden sein zu wollen, nehmen die Erfinder an, dass beim erneuten Aufschmelzen und anschließendem Spritzgießen eine geringfügige Auftrennung der beiden Polymerphasen auftritt, wobei sich z.B. das Polystyrol an der Oberfläche des Formkörpers ansammelt und dadurch zu einer sehr hohen Kratzfestigkeit führt. Dabei bleibt das Polystyrol jedoch mit dem darunter im Volumen angeordneten Polypropylen intensiv verzahnt, so dass keine Ablösung der obersten Polystyrolschicht erfolgen kann, wie das bei bisher angebotenen PP/PS-Polymerblends beobachtet wird. Die Kratzfestigkeit wird durch den erfindungsgemäßen Zusatz von Nanocompositfüllstoffen, insbesondere Nano-Schichtsilikaten, weiter erhöht.

Die Erfindung wird im weiteren unter Bezugnahme auf eine beigefügte Zeichnung sowie anhand von Beispielen näher erläutert.
- Figur 1:: ein Röntgendiffraktogramm eines erfindungsgemäßen Polymerblends (51514);
- Figur 2:: eine elektronenmikroskopische Aufnahme eines Schnitts durch einen aus dem erfindungsgemäßen Polymerblend (51514) hergestellten Probenkörper;

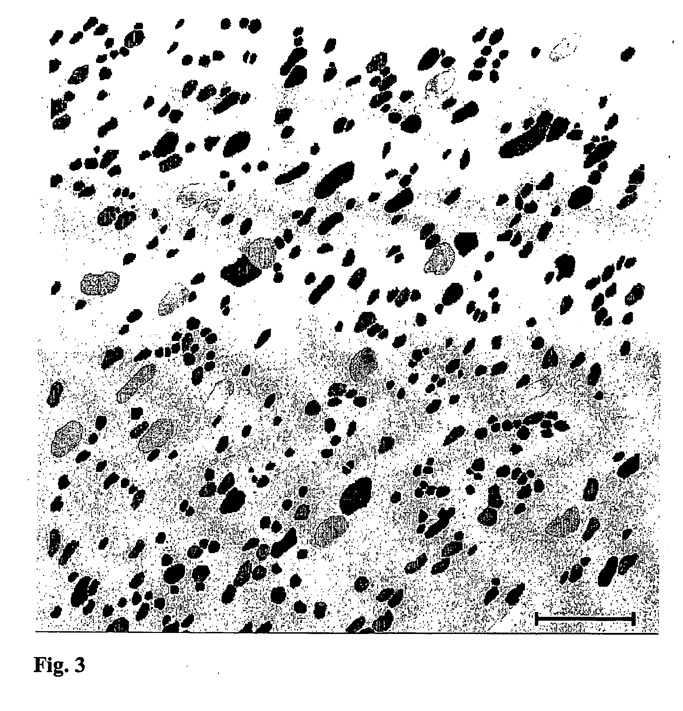

- Figur 3:: eine Abbildung der für die Flächenauswertung verwendeten Darstellung der elektronenmikroskopischen Aufnahme aus Fig. 2; der Balken entspricht einer Länge von 2 µm;
- Figur 4:: eine Darstellung der aus Figur 3 ermittelten Anzahl der Mikrodomänen je Größenklasse in Form eines' Balkendiagramms;
- Figur 5:: eine Darstellung der aus Figur 3 ermittelten Anteils der Fläche einzelner Größenklassen von Mikrodomänen an der Gesamtfläche der aus Polystyrol gebildeten Mikrodomänen in Form eines Balkendiagramms;

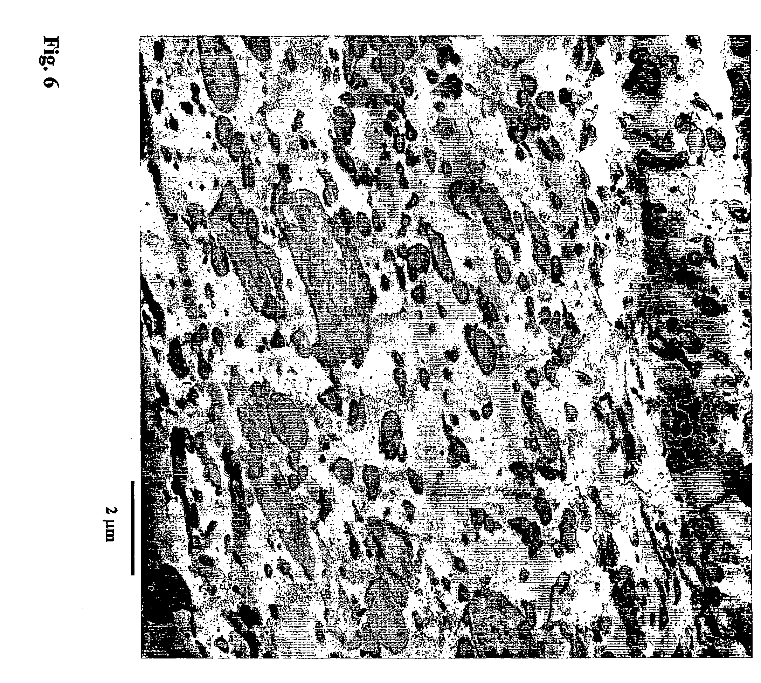

- Figur 6:: eine elektronenmikroskopische Aufnahme eines Schnitts durch einen aus dem Polymerblend (basl1) nach dem Stand der Technik hergestellten Probenkörper;

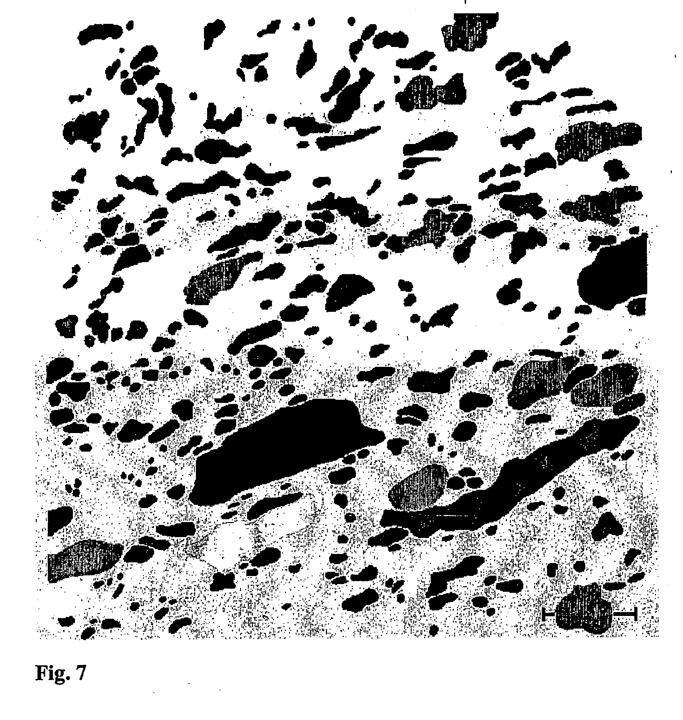

- Figur 7:: eine Abbildung der für die Flächenauswertung verwendeten Darstellung der elektronenmikroskopischen Aufnahme aus Fig. 6, der Balken entspricht einer Länge von 2 µm;
- Figur 8:: eine Darstellung der aus Figur 7 ermittelten Anzahl der Mikrodomänen je Größenklasse in Form eines Balkendiagramms;
- Figur 9:: eine Darstellung der aus Figur 7 ermittelten Anteils der Fläche einzelner Flächenbereiche an der Gesamtfläche der aus Polystyrol gebildeten Mikrodomänen in form eines Balkendiagramms;

### Beispiel 1

Es wurde Polymerblend mit der folgenden Zusammensetzung hergestellt:

| Gewichts-Teile | Komponente |
|---|---|
| 20 | Polystyrol |
| 66 | Polypropylen |
| 4 | Nanofil SE 3000 (Süd-Chemie AG, DE) |
| 7 | SEP |
| 3 | Sonstiges* |

| | |
|---|---|
| * Unter "Sonstiges" sind Bestandteile, wie Farbe, Stabilisatoren und Gleitmittel zusammengefasst. | |

Das Polystyrol und das Polypropylen wurden gravimetrisch dosiert und in einem gleichlaufenden Doppelwellenextruder mit einem Durchmesser von 40 mm und einem Verhältnis L/D von 48 bei einem Durchsatz von 300 kg/h mit einer elektrischen Antriebsenergie von 70 kW aufgeschmolzen und vermengt. Im Extruder wurde ein von 200°C auf 260°C ansteigendes Temperaturprofil eingestellt. Anschließend erfolgte eine Granulierung über eine Unterwassergranulierung. Die erhaltene Probe wird mit "51514" bezeichnet

### Vergleichsbeispiel 1

Zum Vergleich wurde ein üblicherweise im Automobilbau verwendetes Polymergranulat hergestellt. Dieses Polymergranulat wies die folgende Zusammensetzung auf:

| | |
|---|---|
| 79 Gew.-% | Polypropylen |
| 20 Gew.-% | Talkum |
| 1 Gew.- % | Antioxidanz und UV-Stabilisator |

Die Herstellung des Polymerblends erfolgte in einem gleichlaufenden Doppelwellenextruder, wobei das Temperaturprofil des Extruders von 220°C auf 250°C anstieg. Die Granulierung erfolgte über Unterwassergranulierung.

### Vergleichsbeispiel 2

Es wurde Polymerblend mit der folgenden Zusammensetzung hergestellt:

| Gewichts-Teile | Komponente |
|---|---|
| 20 | Polystyrol |
| 66 | Polypropylen |
| 4 | Nanofil 15 (Süd-Chemie AG, DE) |
| 10 | SEP |
| 3 | Sonstiges* |

| | |
|---|---|
| * Unter "Sonstiges" sind Bestandteile, wie Farbe, Stabilisatoren und Gleitmittel zusammengefasst. | |

Nanophil 15 ist ein Montmorillonit, welcher mit einer quarternären Ammoniumverbindung, jedoch nicht mit einem weiteren Additiv modifizeirt worden ist. Die Herstellung und die Granulierung des Polymerblends erfolgte wie bei Beispiel 1 beschrieben. Die erhaltene Probe wird mit "basl1" bezeichnet

### Herstellung der Probenkörper

Die in Beispiel 1 sowie Vergleichsbeispielen 1 und 2 erhaltenen Granulate wurden auf einer DEMAG-Spritzgießmaschine mit 150 t Schließkraft durch Spritzgießen zu normgerechten Zugstäben (ISO 31760) verarbeitet.

### Kratzfestigkeitsprüfung

Die Kratzfestigkeitsprüfung erfolgt nach der VW-Norm PV 3952. Als Kratzbeständigkeit von Kunststoffen wird dabei der Widerstand bezeichnet, den der Werkstoff einer mechanischen Einwirkung, z.B. der Kratzbewegung einer scharfen Kante bzw. eines gerundeten Gegenstandes entgegensetzt. Dazu wird mit einem maschinell geführten Kratzstichel ein Kreuzmuster mit einem Linienabstand von ca. 2 mm in eine lackierte/unlackierte Kunststoffoberfläche eingekratzt. Es wird dabei pro Kratzer nur einmal in eine Richtung gekratzt. Anschließend wird mit einem Farbmessgerät die Farbabweichung in Bezug zur ungekratzten Oberfläche ermittelt.

### Prüfgeräte und Hilfsmittel

Kratzgerät: Elektromotorisches Gitterschnittgerät, Firma Erichsen, Modell 430;
Kratzstichel: Hartmetallspitze mit einem Durchmesser = 1 mm, Gravierspitze des Härteprüfstabes 318; Firma Erichsen;
Farbmessgerät: Nach DIN 5033-4;
Messgeometrie: Nach DIN 5033-7, Abschnitt 3.2.1-45°/0° bzw. Abschnitt 3.2.2-0°/45°;
visuelle Beurteilung unter Normlicht nach DIN 6173 Teil 1 und 2;
Normlicht: D 65.

### Probenvorbereitung

Durch Sichtprüfung wurde überprüft, ob die Oberfläche der Probe homogen ist und keine Verschmutzungen aufweist. Die Handhabung erfolgte ausschließlich mit sauberen, fettfreien Händen. Vor der Kratzprüfung wurden die Proben für 48 Stunden im Normalklima nach DIN 50014-23/50-2 gelagert.

### Versuchsdurchführung

Die Prüfung erfolgte bei 23 ± 5°C.

Mit dem Kratzgerät wurde bei einem Linienabstand von 2 mm ein Kreuzmuster von 40 x 40 mm erzeugt. Die Auflagekraft des Kratzstichels betrug 5 N und die Kratzgeschwindigkeit 1000 mm/min.

### Auswertung

Zur Auswertung werden die farbmetrisch ermittelten Messwerte für dL nach CIELAB-Farbmesssystem des ungekratzten vom gekratzten Bereich angegeben, wobei der Mittelwert aus fünf Einzelmessungen gebildet wurde.
Messmethode: nach DIN 5033-4
Farbabstand: nach DIN 6174
Lichtart: D 65/10°
Messfelddurchmesser: 8 mm.

Es wurden die folgenden Werte bestimmt.

| | |
|---|---|
| Beispiel 1: | dL = 0,5 |
| Vergleichsbeispiel 1: | dL = 2,5 |
| Vergleichsbeispiel 2: | DL = 1,2 |

Die Aufhellung und damit die Sichtbarkeit der Kratzer ist bei dem in Beispiel 1 erhaltenen Probenkörper wegen der härteren Oberfläche wesentlich geringer.

### Weißbruchempfindlichkeit

Die in Beispiel 1 hergestellten Probenkörper wurden mechanisch gebogen. Dabei trat beim in Vergleichsbeispiel 1 hergestellten Probenkörper Weißbruch an der Deformationsstelle auf. Ein solcher Effekt wurde bei dem in Beispiel 1 erhaltenen Probenkörper nicht beobachtet.

### Untersuchungen durch Röntgendiffraktometrie

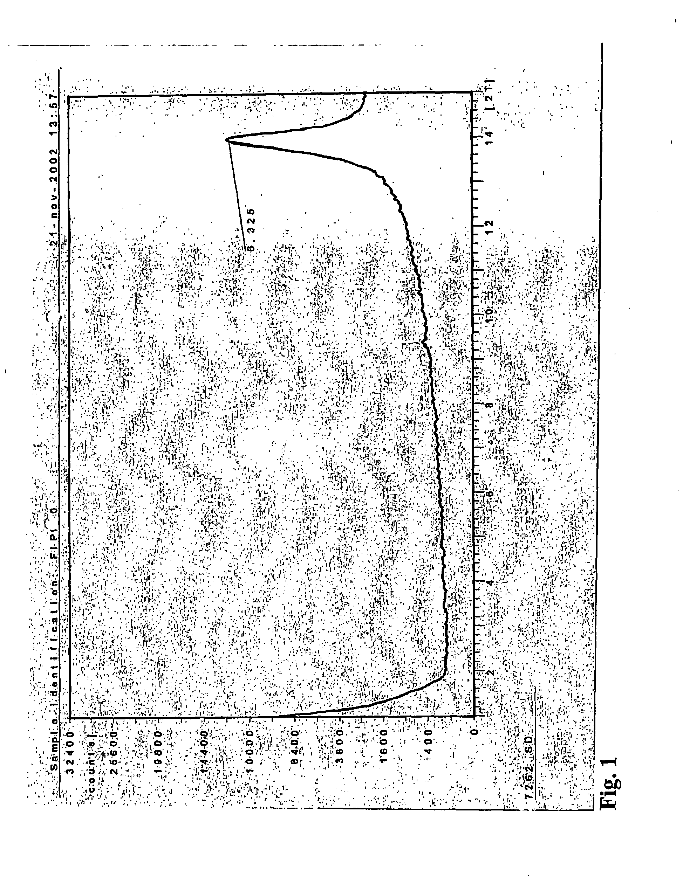

Aus der in Beispiel 1 erhaltenen Probe wurde eine Probe röntgendiffraktometrisch untersucht. Das entsprechende Spektrum ist als Figur 1 dargestellt. Es tritt kein Peak im Bereich von 2Θ 0 bis 14 °auf, der einem Schichtabstand der Aluminiumschichtsilikate zugeordnet werden kann. Es hat daher eine vollständige Exfolierung des zugesetzten Nanocompositfüllstoffs stattgefunden. Der bei ca. 2Θ 14 ° auftretende Peak entspricht kristallinem Polypropylen.

### Untersuchung durch Transmissionselektronenmikroskopie

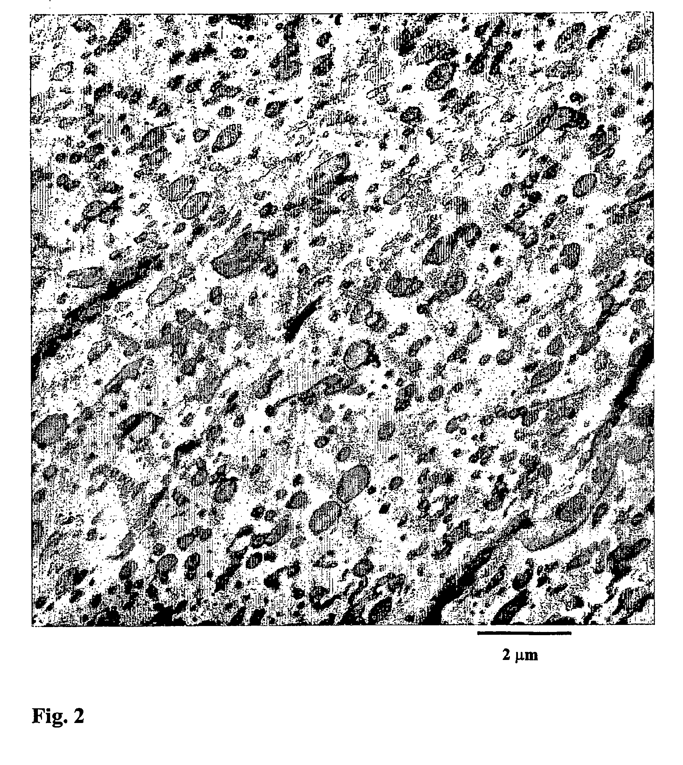

Zur Herstellung der TEM-Aufnahmen wurden mit Hilfe eines Ultramikrotoms aus den mit den im Beispiel 1 sowie Vergleichsbeispiel 2 erhaltenen Polymerblends hergestellten Zugprüfungsstäben bei -40 °C dünne Schnitte geschnitten, die anschließend mit RuO₄ kontrastiert und dann mit einem TEM bei einer Beschleunigungsspannung von 200 kV untersucht. Die für die Polymerblends aus Beispiel 1 sowie Vergleichsbeispiel 2 erhaltenen elektronenmikroskopischen Aufnahmen sind in den Figuren 2 (51514) und 6 (basl1) dargestellt.

Die erhaltenen Aufnahmen wurden von Hand so vorbereitet, dass eine automatische Detektion der isolierten Flächen der Polymerphase vorgenommen werden konnte. Es wurden 50 Klassen zur Einteilung für beide Proben zu Grunde gelegt.

Die Bildanalyse erfolgte mit der Software AnalySIS von Soft Imaging System.

Die für das erfindungsgemäße Polymerblend "51514" sowie das als Vergleich herangezogene Polymerblend "basl1" aus Vergleichsbeispiel 2 ermittelten Werte sind in Tabellen 1 bzw. 2 zusammengefasst. Die Tabellen enthalten jeweils die folgenden Parameter:

| | |
|---|---|
| Fläche Klasse: | Fläche aller Partikel in einer Klasse |
| Flächenanteil: | Prozentualer Anteil der Fläche aller Partikel einer Klasse bezogen auf die Gesamtfläche aller Partikel |
| Mittel Fläche: | mittlere Fläche der Einzelpartikel in der Klasse |
| Anzahl: | Anzahl der Partikel in einer Klasse |
| Relativer Anteil: | Prozentualer Anteil der Partikel einer Klasse bezogen auf die Gesamtzahl aller Partikel |
| ID Klasse: | Klassennummer |

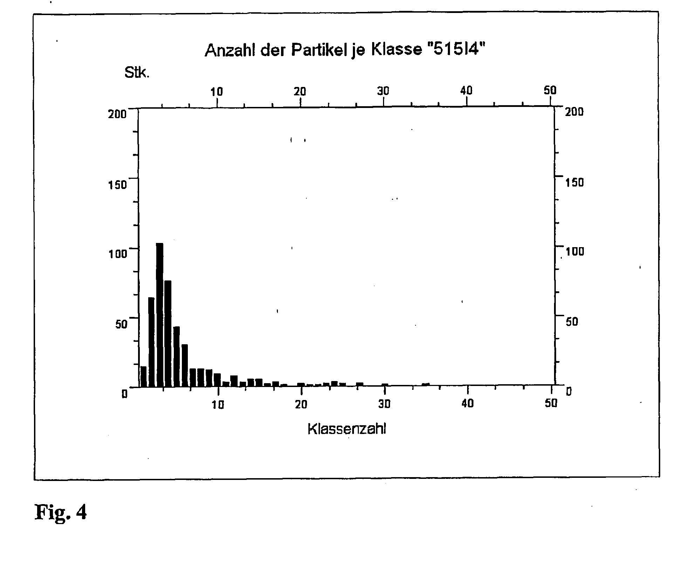

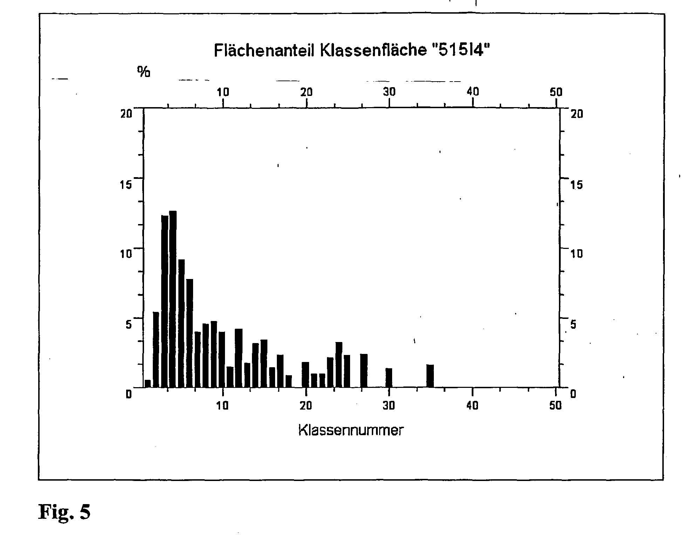

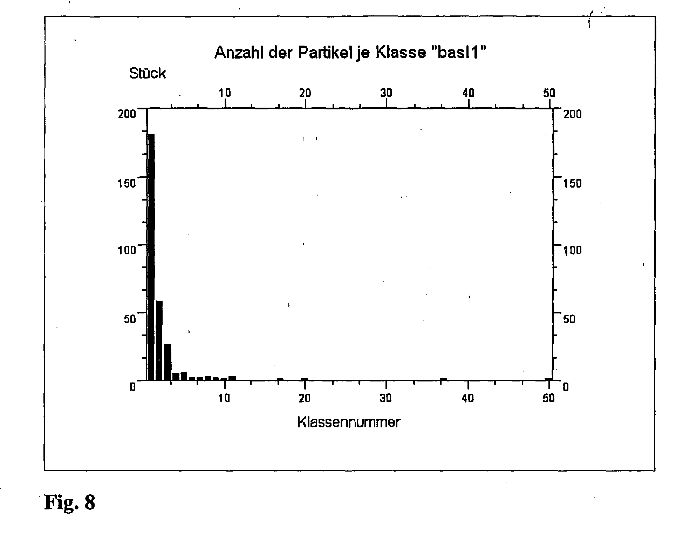

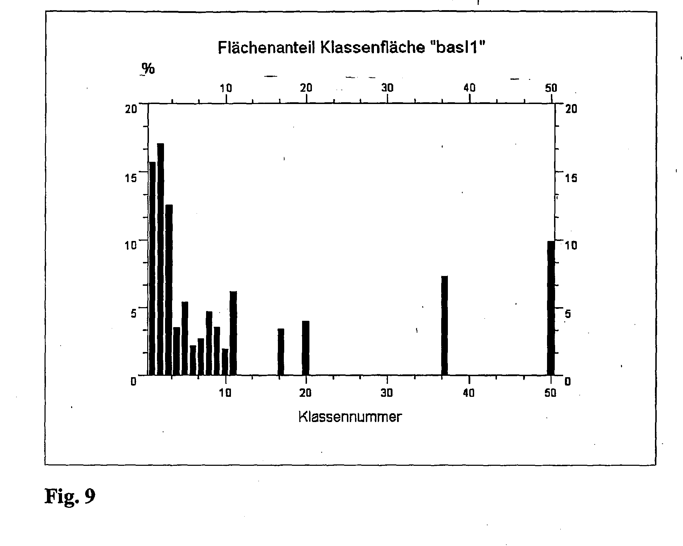

In den Figuren 4 und 8 sind für die Polymerblends "51514" sowie "basl1" die Werte aus der Spalte "Anzahl" gegen die Klassennummer aufgetragen. In den Figuren 5 und 9 sind für die Polymerblends "51514" sowie "basl1" die Werte aus der Spalte "Flächenanteil" gegen die Klassennummer aufgetragen. Man erkennt, dass beim erfindungsgemäßen Polymerblend der Anteil sehr kleiner Mikrodomänen wesentlich höher ist als beim Polymerblend aus Vergleichsbeispiel 2.

**Tabelle 1: Auswertung der Flächenverteilung für das erfindungsgemäße Polymerblend "51514"**

| Fläche Klasse **515I4** | Flächenanteil Klassenfläche | Mittel Fläche | Anzahl Partikel | Relativer Anteil | ID Klasse |
|---|---|---|---|---|---|
| µm² | % | µm² | Stk. | % | |
| 0,14 | 0,54 | 0,01 | 15 | 3,55 | 1 |
| 1,41 | 5,39 | 0,02 | 64 | 15,13 | 2 |
| 3,22 | 12,30 | 0,03 | 103 | 24,35. | 3 |
| 3,31 | 12,62 | 0,04 | 76 | 17,97 | 4 |
| 2,40 | 9,15 | 0,06 | 43 | 10,17 | 5 |
| 2,03 | 7,74 | 0,07 | 30 | 7,09 | 6 |
| 1,03 | 3,94 | 0,08 | 13 | 3,07 | 7 |
| 1,20 | 4,57 | 0,09 | 13 | 3,07 | 8 |
| 1,24 | 4,74 | 0,10 | 12 | 2,84 | 9 |
| 1,04 | 3,97 | 0,12 | 9 | 2,13 | 10 |
| 0,38 | 1,46 | 0,13 | 3 | 0,71 | 11 |
| 1,09 | 4,15 | 0,14 | 8 | 1,89 | 12 |
| 0,45 | 1,73 | 0,15 | 3 | 0,71 | 13 |
| 0,82 | 3,14 | 0,16 | 5 | 1,18 | 14 |
| 0,88 | 3,37 | 0,18 | 5 | 1,18 | 15 |
| 0,38 | 1,44 | 0,19 | 2 | 0,47 | 16 |
| 0,60 | 2,30 | 0,20 | 3 | 0,71 | 17 |
| 0,22 | 0,82 | 0,22 | 1 | 0,24 | 18 |
| 0,00 | 0,00 | 0,00 | 0 | 0,00 | 19 |
| 0,47 | 1,78 | 0,23 | 2 | 0,47 | 20 |
| 0,24 | 0,93 | 0,24 | 1 | 0,24 | 21 |
| 0,26 | 0,98 | 0,26 | 1 | 0,24 | 22 |
| 0,55 | 2,09 | 0,27 | 2 | 0,47 | 23 |
| 0,85 | 3,23 | 0,28 | 3, | 0,71 | 24 |
| 0,60 | 2,28 | 0,30 | 2 | 0,47 | 25 |
| 0,00 | 0,00 | 0,00 | 0 | 0,00 | 26 |
| 0,63 | 2,40 | 0,31 | 2 | 0,47 | 27 |
| 0,00 | 0,00 | 0,00 | 0 | 0,00 | 28 |
| 0,00 | 0,00 | 0,00 | 0 | 0,00 | 29 |
| 0,35 | 1,35 | 0,35 | 1 | 0,24 | 30 |
| 0,00 | 0,00 | 0,00 | 0 | 0,00 | 31 |
| 0,00 | 0,00 | 0,00 | 0 | 0,00 | 32 |
| 0,00 | 0,00 | 0,00 | 0 | 0,00 | 33 |
| 0,00 | 0,00 | 0,00 | 0 | 0,00 | 34 |
| 0,42 | 1,59 | 0,42 | 1 | 0,24 | 35 |
| 0,00 | 0,00 | 0,00 | 0 | 0,00 | 36 |
| 0,00 | 0,00 | 0,00 | 0 | 0,00 | 37 |
| 0,00 | 0,00 | 0,00 | 0 | 0,00 | 38 |
| 0,00 | 0,00 | 0,00 | 0 | 0,00 | 39 |
| 0,00 | 0,00 | 0,00 | 0 | 0,00 | 40 |
| 0,00 | 0,00 | 0,00 | 0 | 0,00 | 41 |
| 0,00 | 0,00 | 0,00 | 0 | 0,00 | 42 |
| 0,00 | 0,00 | 0,00 | 0 | 0,00 | 43 |
| 0,00 | 0,00 | 0,00 | 0 | 0,00 | 44 |
| 0,00 | 0,00 | 0,00 | 0 | 0,00 | 45 |
| 0,00 | 0,00 | 0,00 | 0 | 0,00 | 46 |
| 0,00 | 0,00 | 0,00 | 0 | 0,00 | 47 |
| 0,00 | 0,00 | 0,00 | 0 | 0,00 | 48 |
| 0,00 | 0,00 | 0,00 | 0 | 0,00 | 49 |
| 0,00 | 0,00 | 0,00 | 0 | 0,00 | 50 |

**Tabelle 2: Auswertung der Flächenverteilung für das als Vergleich herangezogene Polymerblend "basll"**

| Fläche Klasse **basI1** | Flächenanteil Klassenfläche | Mittel Fläche | Anzahl Partikel | Relativer Anteil | ID Klasse |
|---|---|---|---|---|---|
| µm² | % | µm² | Stck. | % | |
| 7,80 | 15,69 | 0,04 | 181 | 61,77 | 1 |
| 8,47 | 17,05 | 0,15 | 58 | 19,80 | 2 |
| 6,23 | 12,53 | 0,24 | 26 | 8,87 | 3 |
| 1,76 | 3,54 | 0,35 | 5 | 1,71 | 4 |
| 2,68 | 5,38 | 0,45 | 6 | 2,05 | 5 |
| 1,08 | 2,18 | 0,54 | 2 | 0,68 | 6 |
| 1,35 | 2,71 | 0,67 | 2 | 0,68 | 7 |
| 2,34 | 4,70 | 0,78 | 3 | 1,02 | 8 |
| 1,76 | 3,54 | 0,88 | 2 | 0,68 | 9 |
| 0,96 | 1,93 | 0,96 | 1 | 0,34 | 10 |
| 3,05 | 6,14 | 1,02 | 3 | 1,02 | 11 |
| 0,00 | 0,00 | 0,00 | 0 | 0,00 | 12 |
| 0,00 | 0,00 | 0,00 | 0 | 0,00 | 13 |
| 0,00 | 0,00 | 0,00 | 0 | 0,00 | 14 |
| 0,00 | 0,00 | 0,00 | 0 | 0,00 | 15 |
| 0,00 | 0,00 | 0,00 | 0 | 0,00 | 16 |
| 1,68 | 3,39 | 1,68 | 1 | 0,34 | 17 |
| 0,00 | 0,00 | 0,00 | 0 | 0,00 | 18 |
| 0,00 | 0,00 | 0,00 | 0 | 0,00 | 19 |
| 1,98 | 3,99 | 1,98 | 1 | 0,34 | 20 |
| 0,00 | 0,00 | 0,00 | 0 | 0,00 | 21 |
| 0,00 | 0,00 | 0,00 | 0 | 0,00 | 22 |
| 0,00 | 0,00 | 0,00 | 0 | 0,00 | 23 |
| 0,00 | 0,00 | 0,00 | 0 | 0,00 | 24 |
| 0,00 | 0,00 | 0,00 | 0 | 0,00 | 25 |
| 0,00 | 0,00 | 0,00 | 0 | 0,00 | 26 |
| 0,00 | 0,00 | 0,00 | 0 | 0,00 | 27 |
| 0,00 | 0,00 | 0,00 | 0 | 0,00 | 28 |
| 0,00 | 0,00 | 0,00 | 0 | 0,00 | 29 |
| 0,00 | 0,00 | 0,00 | 0 | 0,00 | 30 |
| 0,00 | 0,00 | 0,00 | 0 | 0,00 | 31 |
| 0,00 | 0,00 | 0,00 | 0 | 0,00 | 32 |
| 0,00 | 0,00 | 0,00 | 0 | 0,00 | 33 |
| 0,00 | 0,00 | 0,00 | 0 | 0,00 | 34 |
| 0,00 | 0,00 | 0,00 | 0 | 0,00 | 35 |
| 0,00 | 0,00 | 0,00 | 0 | 0,00 | 36 |
| 3,65 | 7,34 | 3,65 | 1 | 0,34 | 37 |
| 0,00 | 0,00 | 0,00 | 0 | 0,00 | 38 |
| 0,00 | 0,00 | 0,00 | 0 | 0,00 | 39 |
| 0,00 | 0,00 | 0,00 | 0 | 0,00 | 40 |
| 0,00 | 0,00 | 0,00 | 0 | 0,00 | 41 |
| 0,00 | 0,00 | 0,00 | 0 | 0,00 | 42 |
| 0,00 | 0,00 | 0,00 | 0 | 0,00 | 43 |
| 0,00 | 0,00 | 0,00 | 0 | 0,00 | 44 |
| 0,00 | 0,00 | 0,00 | 0 | 0,00 | 45 |
| 0,00 | 0,00 | 0,00 | 0 | 0,00 | 46 |
| 0,00 | 0,00 | 0,00 | 0 | 0,00 | 47 |
| 0,00 | 0,00 | 0,00 | 0 | 0,00 | 48 |
| 0,00 | 0,00 | 0,00 | 0 | 0,00 | 49 |
| 4,91 | 9,88 | 4,91 | 1 | 0,34 | 50 |

## Patentansprüche

1. Verfahren zur Herstellung eines Polypropylen-Polymerblends mit einem Anteil von, jeweils bezogen auf die gesamte Masse des Polymerblends, 40 bis 80 Gew.-% eines Polypropylens und/oder eines Polypropylencopolymers und einem Anteil von 10 bis 30 Gew.-% zumindest eines mit dem Polypropylen und/oder dem Polypropylencopolymer unverträglichen weiteren Polymers, welches ausgewählt ist aus Polystyrol und Polystyrolcopolymeren, wobei das Polypropylen und/oder das Polypropylencopolymer sowie das weitere Polymer aufgeschmolzen wird, und die Schmelzen bei hochscherenden Bedingungen unter Zusatz eines organisch modifizierten Nanocompositfüllstoffs intensiv vermengt werden, wobei der Nanocompositfüllstoff ein Aluminiumschichtsilikat ist, welches modifiziert ist mit zumindest einem organischen Modifikationsagens, das ausgewählt ist aus der Gruppe, die gebildet wird aus Ammoniumverbindungen, Sulfoniumverbindungen und Phosphoniumverbindungen, welche zumindest eine langkettige Kohlenstoffkette mit 12 bis 22 Kohlenstoffatomen tragen, sowie zumindest einem Additiv, das ausgewählt ist aus der Gruppe, die gebildet ist aus Fettsäuren und Fettsäurederivaten, sowie nicht-anionischen, organischen Komponenten, die zumindest einen aliphatischen oder zyklischen Rest mit 6 bis 32 Kohlenstoffatomen enthalten.

2. Verfahren nach Anspruch 1, wobei der organisch modifizierte Nanocompositfüllstoff bezogen auf die Masse des Polypropylen-Polymerblends in einem Anteil von 0,5 bis 10 Gew.-% beigegeben wird.

3. Verfahren nach einem der vorhergehenden Ansprüche, wobei die nicht-anionischen, organischen Komponenten ausgewählt sind aus der Gruppe, die gebildet ist aus Fettalkoholen, Fettaldehyden, Fettketonen, Fettalkoholpolyglycolethern, Fettaminen, Mono-, Di- und Triglyzeridester, Fettsäurealkanolamiden, Fettsäureamiden, Fettsäurealkylestern, Fettsäureglukamiden, Dicarbonsäureestern, Wachsen, wasserunlöslichen fettsauren Seifen, Montanwachsen, sowie Paraffinen, Polyethylenwachsen und Polysiloxanen.

4. Verfahren nach einem der vorhergehenden Ansprüche, wobei das weitere Polymer Polystyrol ist.

5. Verfahren nach einem der vorhergehenden Ansprüche, wobei der Schmelze ein Blockcopolymer als Vermittler beigegeben wird in einem Anteil, bezogen auf die Masse des Polymerblends, von 5 bis 15 Gew.-%.

6. Verfahren nach einem der vorhergehenden Ansprüche, wobei das intensive Vermengen der Schmelzen bei einem Energieeintrag von 0,1 bis 5 kWh/kg erfolgt.

7. Verfahren nach einem der vorhergehenden Ansprüche, wobei das intensive Vermengen der Schmelzen für eine Mischzeit von wenigstens einer Minute, vorzugsweise 1 bis 15 Minuten erfolgt.

8. Verfahren nach einem der vorhergehenden Ansprüche, wobei die intensive Vermengung der Schmelzen in einem Extruder erfolgt, vorzugsweise einem gleichlaufenden Doppelwellenextruder.

9. Verfahren nach einem der vorhergehenden Ansprüche, wobei die Vermischung mit einem Temperaturprofil erfolgt, bei welchem die Temperatur mit zunehmender Vermischung erhöht wird, vorzugsweise von einer Temperatur von etwa 150°C - 200 °C auf eine Temperatur von etwa 210 °C - 260°C.

10. Verfahren nach einem der vorhergehenden Ansprüche, wobei der Schmelze ein faserförmiger Verstärkungsstoff beigegeben wird.

11. Polymerblend, enthaltend ein Polypropylen und/oder ein Polypropylencopolymer in einem Anteil von, bezogen auf das Gewicht des Polymerblends, 40 bis 80 Gew.-%, zumindest ein mit dem Polypropylen und/oder dem Polypropylencopolymer unverträgliches weiteres Polymer welches ausgewählt ist aus Polystyrol und Polystyrolcopolymeren, in einem Anteil von 10 bis 30 Gew.-%, sowie ein exfolierter organisch modifizierter Nanocompositfüllstoff, wobei das Polypropylen und/oder das Polypropylencopolymer eine vorzugsweise kontinuierliche Hauptphase und das zumindest eine weitere Polymer eine vorzugsweise diskontinuierliche Nebenphase bildet, und wobei die diskontinuierliche Phase des weiteren Polymers in einem Schnittbild durch das Polymerblend einen Anteil von inselförmigen Mikrodomänen mit einer Fläche von weniger als 0,04 µm², bezogen auf die gesamte Fläche der von dem weiteren Polymer gebildeten Mikrodomänen von mehr als 18 % aufweist.

12. Polymerblend nach Anspruch 11, wobei das zumindest eine weitere Polymer'Polystyrol (PS) ist.

13. Polymerblend nach Anspruch 11 oder 12, wobei der organisch modifizierte Nanocompositfüllstoff bezogen auf die Masse des Polypropylen-Polymerblends in einem Anteil von 0,5 bis 10 Gew.-% enthalten ist.

14. Polymerblend nach einem der Ansprüche 11 bis 13, wobei das Polymerblend ein Blockcopolymer als Vermittler in einem Anteil von 5 bis 15 Gew.-% enthält.

15. Polymerblend nach einem der Ansprüche 11 bis 14, hergestellt nach einem Verfahren gemäß einem der Ansprüche 1 bis 10.

16. Formkörper aus einem Polymerblend gemäß einem der Ansprüche 11 bis 15.

17. Formkörper nach Anspruch 16, hergestellt durch Spritzgießen.

## Claims

1. A method of preparing a polypropylene blend with a proportion, in each case based on the total weight of the polymer blend, of 40 to 80 % by weight of a polypropylene and/or a polypropylene copolymer and a proportion of 10 to 30 % by weight of at least one other polymer which is not compatible with the polypropylene and/or the polypropylene copolymer and which is selected from polystyrene and polystyrene copolymers, wherein the polypropylene and/or the polypropylene copolymer and also the other polymer is melted, and the melts are intensively under high shear conditions with the addition of an organically modified nanocomposite filler, wherein the nanocomposite filler is aluminium layered silicate which is modified with at least one organic modifier which is selected from the group which comprises ammonium compounds, sulphonium compounds and phosphonium compounds which carry at least one long-chain carbon chain having 12 to 22 carbon atoms, as well as with at least one additive which is selected from the group comprising fatty acids and fatty acid derivatives, as well as non-ionic, organic components which contain at least one aliphatic or cyclic radical having 6 to 32 carbon atoms.

2. A method according to Claim 1, wherein based on the weight of the polypropylene polymer blend the organically modified nanocomposite filler is added in a proportion of 0.5 to 10 % by weight.

3. A method according to one of the preceding Claims, wherein the non-anionic, organic components are selected from the group comprising fatty alcohols, fatty aldehydes, fatty ketones, fatty alcohol polyglycol ethers, fatty amines, mono, di and triglyceride esters, fatty acid alkanolamides, fatty acid amides, fatty acid alkyl esters, fatty acid glucamides, dicarboxylic acid esters, waxes, water-insoluble fatty acid soaps, montan waxes, as well as paraffins, polyethylene waxes and polysiloxanes.

4. A method according to any one of the preceding Claims, wherein the other polymer is polystyrene.

5. A method according to any one of the preceding Claims, wherein a block copolymer is added as an intermediate agent to the melts in a proportion of 5 to 15 % by weight, based on the weight of the polymer blend.

6. A method according to any one of the preceding Claims, wherein the intensive mixing of the melts takes place with an energy input of 0.1 to 5 kWh/kg.

7. A method according to any one of the preceding Claims, wherein the intensive mixing of the melts takes place for a mixing time of at least one minute, preferably 1 to 15 minutes.

8. A method according to any one of the preceding Claims, wherein the intensive mixing of the melts is carried out is an extruder, preferably in a synchronous twin-shaft extruder.

9. A method according to any one of the preceding Claims, wherein the mixing takes place with a temperature profile in which the temperature is raised as the mixing increases, preferably from a temperature of approximately 150°C to 200°C to a temperature of approximately 210°C to 260°C.

10. A method according to any one of the preceding Claims, wherein a fibrous reinforcing material is added to the melt.

11. A polymer blend, containing a polypropylene and/or a polypropylene copolymer in a proportion, based on the weight of the polymer blend, of 40 to 80 % by weight, at least one other polymer which is not compatible with the polypropylene and/or the polypropylene copolymer and which is selected from polystyrene and polystyrene copolymers, in a proportion of 10 to 30 % by weight, as well as an exfoliated organically modified nanocomposite filler, wherein the polypropylene and/or polypropylene copolymer forms a preferably continuous primary phase and the at least one other polymer forms a preferably discontinuous secondary phase, and wherein in a sectional image through the polymer blend the discontinuous phase of the other polymer has a proportion of insular microdomains with an area of less than 0.04 µm², based on the total area of the microdomains formed by the other polymer, of more than 18 %.

12. A polymer blend according to Claim 11, wherein the at least one other polymer is polystyrene (PS).

13. A polymer blend according to Claim 11 or 12, wherein the organically modified nanocomposite filler, based on the weight of the polypropylene polymer blend, is contained in a proportion of 0.5 to 10 % by weight.

14. A polymer blend according to any one of Claims 11 to 13, wherein the polymer blend contains a block copolymer as intermediate agent in a proportion of 5 to 15 % by weight.

15. A polymer blend according to any of Claims 11 to 14, prepared in accordance with a method according to any one of Claims 1 to 10.

16. A moulded article composed of a polymer blend according to any one of Claims 11 to 15.

17. A moulded article according to Claim 16, produced by injection moulding.

## Revendications

1. Procédé de fabrication d'un mélange polymérique de polypropylène ayant une proportion de, respectivement sur la masse totale du mélange polymérique, 40 à 80 % en poids d'un polypropylène et/ou d'un copolymère de polypropylène, et une proportion de 10 à 30 % en poids d'au moins un autre polymère incompatible avec le polypropylène et/ou le copolymère de polypropylène, qui est choisi parmi le polystyrène et les copolymères de polystyrène, où le polypropylène et/ou le copolymère de polypropylène et l'autre polymère sont fondus, et les matières fondues sont mélangées de manière intensive dans des conditions de fort cisaillement avec addition d'une charge nanocomposite modifiée par un agent organique, où la charge nanocomposite est un silicate lamellaire d'aluminium modifié avec au moins un agent de modification organique, qui est choisi dans le groupe formé par les composés d'ammonium, les composés de sulfonium et les composés de phosphonium, qui portent au moins une chaîne carbonée longue avec de 12 à 22 atomes de carbone, ainsi qu'avec au moins un additif, qui est choisi dans le groupe formé par les acides gras et dérivés d'acides gras, ainsi que les composants organiques non anioniques, qui contiennent au moins un radical aliphatique ou cyclique avec de 6 à 32 atomes de carbone.

2. Procédé selon la revendication 1, dans lequel la charge nanocomposite modifiée par un agent organique, par rapport à la masse du mélange polymérique de polypropylène, est ajoutée en une proportion de 0,5 à 10 % en poids.

3. Procédé selon l'une des revendications précédentes, où les composants organiques non anioniques sont choisis dans le groupe constitué'par les alcools gras, les aldéhydes gras, les cétones grasses, les éthers d'alcools gras de polyglycols, les amines grasses, les esters de mono-, di- et triglycérides, les alcanolamides d'acides gras, les amides d'acides gras, les alkylesters d'acides gras, les glucamides d'acides gras, les esters d'acides dicarboxyliques, les cires, les savons d'acides gras insolubles dans l'eau, les cires de lignite, ainsi que les paraffines, les cires de polyéthylène et les polysiloxanes.

4. Procédé selon l'une des revendications précédentes, dans lequel l'autre polymère est le polystyrène.

5. Procédé selon l'une des revendications précédentes, dans lequel la matière fondue est additionnée d'un copolymère à blocs à titre de médiateur en une proportion, par rapport à la masse du mélange polymérique, de 5 à 15 % en poids.

6. Procédé selon l'une des revendications précédentes, dans lequel le mélange intensif de la matière fondue s'effectue avec un apport d'énergie de 0,1 à 5 kWh/kg.

7. Procédé selon l'une des revendications précédentes, dans lequel le mélange intensif de la matière fondue s'effectue pendant une durée de mélange d'au moins 1 minute, de préférence de 1 à 15 minutes.

8. Procédé selon l'une des revendications précédentes, dans lequel le mélange intensif de la matière fondue s'effectue dans une extrudeuse, de préférence une extrudeuse à double vis tournant dans le même sens.

9. Procédé selon l'une des revendications précédentes, dans lequel le mélange s'effectue avec un profil de températures, dans lequel la température s'élève avec l'augmentation du mélange, de préférence depuis une température d'environ 150°C à 200°C jusqu'à une température d'environ 210°C à 260°C.

10. Procédé selon l'une des revendications précédentes, dans lequel la matière fondue est additionnée d'une matière de renforcement sous forme de fibres.

11. Mélange polymérique, contenant un polypropylène et/ou un copolymère de polypropylène en une proportion, par rapport au poids du mélange polymérique, de 40 à 80 % en poids, au moins un autre polymère incompatible avec le polypropylène et/ou le copolymère de polypropylène, qui est choisi parmi le polystyrène et les copolymères de polystyrène, en une proportion de 10 à 30 % en poids ainsi qu'une charge nanocomposite exfoliée modifiée par un agent organique, où le polypropylène et/ou le copolymère de polypropylène forme une phase principale de préférence continue et le au moins un autre polymère forme une phase secondaire de préférence discontinue, et où la phase discontinue de l'autre polymère présente, dans une vue en coupe du mélange polymérique, une proportion de microdomaines en forme d'îlots ayant une surface de moins de 0,04 µm², par rapport à la surface totale des microdomaines formés par l'autre polymère, de plus de 18 %.

12. Mélange polymérique selon la revendication 11, où le au moins un autre polymère est le polystyrène (PS).

13. Mélange polymérique selon la revendication 11 ou 12, où la charge nanocomposite modifiée par un agent organique, par rapport à la masse du mélange polymérique de polypropylène, est contenue en une proportion de 0,5 à 10 % en poids.

14. Mélange polymérique selon l'une des revendications 11 à 13, dans lequel le mélange polymérique contient un copolymère à blocs à titre de médiateur en une proportion de 5 à 15 % en poids.

15. Mélange polymérique selon l'une des revendications 11 à 14, fabriqué d'après un procédé selon l'une des revendications 1 à 10.

16. Corps moulé constitué d'un mélange polymérique selon l'une des revendications 11 à 15.

17. Corps moulé selon la revendication 16, fabriqué par moulage par injection.
